# EUROPÄISCHE PATENTANMELDUNG

(11) **EP 1 974 805 A2**
(43) Veröffentlichungstag der Anmeldung: **01.10.2008**
(21) Anmeldenummer: 08005451.3
(22) Anmeldetag: 26.03.2008
(51) Int. Cl.: B01F 7/00, B05C 17/005, C09D 5/34

(54) **Geraet zur Herstellung einer gebrauchsfertigen Spachtelmasse durch Vermischen einer Binder- und einer Haerter-Komponente**

(30) Priorität: 29.03.2007 DE 202007004570 U; 31.05.2007 DE 202007007782 U; 24.08.2007 EP 07016608; 19.11.2007 DE 202007016136 U; 25.03.2008 DE 202008004098 U
(71) Anmelder: VOSSCHEMIE GmbH, 25436 Uetersen (DE)
(72) Erfinder: Voss, Klaus-W., 25436 Uetersen (DE)
(74) Vertreter: Richter, Werdermann, Gerbaulet & Hofmann

(57) **Zusammenfassung**

Das Gerät (100) zur Herstellung einer gebrauchsfertigen Spachtelmasse für die Verspachtelung von Oberflächen, insbesondere von Fahrzeugkarosserien, durch Vermischen einer Binder-Komponente und einer Härter-Komponente, vermittels einer Mischvorrichtung (1) aus einem hohlzylinderartigen Statorteil und einem in diesem drehbar angeordneten Rotorteil und einem zwischen dem Rotorteil und dem Statorteil ausgebildeten, die Mischkammer bildenden Ringspalt, zu einem pastösen oder flüssigen Mischgut, umfasst einen Standfuß (101) mit einer einen Abfüllkopf (104) bildende Tragplatte (104') zur Aufnahme eines Vorratsbehälters (90) für die Binder-Komponente und für drei Vorratsbehälter (91, 92, 92') für die Härter-Komponente sowie mit einer ersten Antriebsvorrichtung (102) für das Betätigen der Hydraulikzylinder für den Vorratsbehälter (90) für die Binder-Komponente und für zwei Vorratsbehälter (91, 92) für die Härter-Komponente, eine zweite Antriebsvorrichtung (250) für die Mischvorrichtung (1) und eine dritte Antriebsvorrichtung (270) für das Betätigen der als Zahnstange ausgebildeten Kolbenstange, wobei alle drei Antriebsvonichtungen in einer Steuervorrichtung (280) zusammengeführt sind, über die ein Vorlauf an Härter-Komponente für 1 Sekunde und ein Nachlauf für 1 Sekunde sowie die Zufuhr der Binder-Komponente und weitere Härter-Komponenten in die Mischvorrichtung (1) gesteuert werden.

## Beschreibung

Die vorliegende Erfindung betrifft ein Gerät zur Herstellung einer gebrauchsfertigen Spachtelmasse durch Vermischen von zumindest zwei Komponenten, insbesondere von einer Binder-Komponente und einer Härter-Komponente zu einem pastösen oder flüssigen Mischgut, gemäß dem Oberbegriff des Anspruches 1.

Derartige Vorrichtungen zur Vermischung von zumindest zwei Komponenten finden beispielsweise bei der Herstellung von Spachtelmassen Anwendung, wobei eine Härter-Komponente mit einem 1...2%igen Anteil einer Binder-Komponente zugemischt wird, um eine aushärtbare Spachtelmasse zu erzeugen. Die Mischvorrichtung weist zur Zufuhr der jeweiligen Komponenten Eintrittsöffnungen auf, über welche die Komponenten in die Mischkammer zugegeben werden. Die Komponenten sind in vorgeschaltenen Aufnahmebehältern wie Kartuschen oder Ähnlichem bevorratet, wobei die Mischvorrichtung Teil einer Einrichtung zur Bereitstellung von Spachtelmassen ist.

Eine derartige Vorrichtung zur Herstellung einer gebrauchsfertigen Spachtelmasse für die Verspachtelung von Oberflächen, welche beispielsweise Fahrzeugkarosserien betreffen, ist aus der DE 203 07 518 U1 bekannt. Die Vorrichtung hat zwei an einer Basisstation angeordnete Vorratsbehälter, von denen der eine mit einer Binder-Komponente, nämlich einer Spachtelmasse-Komponente, und der andere mit einer Härter-Komponente befüllt ist. Mit Hilfe einer Dosiereinrichtung werden die beiden Komponenten jeweils über einen Zufuhrkanal kontinuierlich einer Mischkammer zugeführt, in der die Komponenten miteinander in Kontakt geraten. Die Mischkammer ist aus einem Schlauchabschnitt eines flexiblen Schlauches gebildet, an dem außenseitig Presswalzen angreifen, die den Schlauchabschnitt zusammendrücken und gleichzeitig um eine Längsachse umlaufend antreiben. Durch die dabei auftretende Reibung und die Adhäsion der Komponenten an der Innenwand des Schlauches werden die Komponenten miteinander vermischt. Nachdem das Mischgut den Schlauchabschnitt durchlaufen hat, gelangt es zu einer an dem Schlauch vorgesehenen Austrittsöffnung, an der es kontinuierlich aus dem Schlauch austritt. Die Schlauchwand besteht aus einem luftdichten Kunststoff, so dass die dem Schlauch umgebende Luft während des Mischprozesses nicht in das Mischgut gelangen und in diesem in Form von Poren oder Lunkem eingeschlossen werden kann.

Durch die EP 1 627 690 A ist eine Klebstoffpistole zum Auftragen, insbesondere eines Zweikomponentenklebers bekannt, die in einfacher Weise eine breite Spanne von Mischungsverhältnissen zwischen einer relativ zähen Klebstoffkomponente und einer relativ flüssigen Klebstoffkomponente in einer Klebstoffpistole ermöglicht. Diese Klebstoffpistole umfasst einen ersten zylindrischen Behälter, der mit einem ersten Kolben zum Pressen einer relativ zähen Klebstoffkomponente aus einem ersten zylindrischen Behälter versehen ist, einen zweiten zylindrischen Behälter, der mit einem zweiten Kolben zum Pressen einer relativ flüssigen Klebstoffkomponente aus dem zweiten zylindrischen Behälter versehen ist, eine Mischeinheit, in die der erste zylindrische Behälter und der zweite zylindrische Behälter münden, und Antriebsmittel zum Bewegen des ersten und des zweiten Kolbens, wobei die Antriebsmittel für eine größere Geschwindigkeit des ersten Kolbens, als der Geschwindigkeit des zweiten Kolbens ausgelegt sind, wobei der erste zylindrische Behälter einen größeren Innendurchmesser aufweist, als der zweite zylindrische Behälter.

Die EP 1 570 805 A offenbart eine Vorrichtung zur Erzeugung eines Gemisches aus mehreren Komponenten, insbesondere für zahnmedizinische Zwecke: Diese Vorrichtung umfasst mindestens zwei Kartuschen, wobei jede Kartusche eine Komponente des Gemisches aus mehreren Komponenten und einen Kolben enthält, der zum Hinauspressen der Komponente aus der Kartusche eingerichtet ist und eine Antriebsvorrichtung für die Kolben, in der die Antriebsgeschwindigkeit einstellbar ist, wobei die Antriebsvorrichtung einen Schrittmotor aufweist. Bei niedrigen Drehzahlen pro Minute soll der Schrittmotor ein höheres Drehmoment im Vergleich zu bekannten Gleichstrommotoren bieten, während er auch hohe Drehzahlen pro Minute zur Verfügung stellt, wenn auch mit vergleichsweise geringem Drehmoment, was für einen schnellen Vortrieb und Rückzug der Kolben ausreicht.

Die US 6,499,630 B offenbart eine Anordnung zum verhältnisgleichen Ausbringen von zwei oder mehr fließfähigen Substanzen, aus zwei oder mehr Spritzen, von denen zumindest eine auch allein oder in Verbindung mit anderen Spritzen benutzt wird, insbesondere für Dentalzwecke. Nach dieser Anordnung ist vorgesehen, dass sowohl die Spritzenkörper als auch die Spritzenkolben unabhängig von der jeweiligen Kolbenstellung in Vorschubrichtung starr durch lösbare Kupplungseinrichtungen miteinander gekuppelt werden können. Die Kupplungseinrichtungen sind dabei so ausgebildet, dass die Kolben und/oder die Spritzenkörper in beliebiger Relativstellung zueinander in Vorschubrichtung verbunden werden können. Diese Anordnung sieht ferner vor, dass die Spritzenkörper nur in einer vorbestimmten Relativstellung, die den Kolben zugehörigen Kolbenstangen aber in einer beliebigen relativen Stellung miteinander kuppelbar sind.

In der Praxis hat sich jedoch gezeigt, dass die mit der Vorrichtung angemischte Spachtelmasse gelegentlich noch Inhomogenitäten aufweist. Wenn die Spachtelmasse an der Oberfläche einer Fahrzeugkarosserie verspachtelt wird, härtet die Spachtelmasse an den Stellen, an denen keine Härter-Komponente vorhanden ist, nicht aus. Die Beseitigung derartiger Fehlstellen ist mit einem relativ großen Aufwand verbunden, da die Spachtelmasse durch Schleifen von der Karosserie abgetragen und danach die Karosserie erneut verspachtelt werden muss. Wenn derartige Fehlstellen bei einer Reparatur unbemerkt bleiben und die Karosserie danach lackiert wird, wird es sogar erforderlich, die Stelle neu zu lackieren. Bleibt die Mischvorrichtung längerfristig außer Gebrauch, kann ein Eintrocknen der Spachtelmasse insbesondere im Endbereich des Schlauches erfolgen, was zur Unbrauchbarkeit der Vorrichtung führt. Darüber hinaus ist der Schlauch einem erheblichen Verschleiß ausgesetzt, da während des Betriebes der Vorrichtung in den Schlauch eine erhebliche Walkarbeit eingebracht wird. Weiterhin ist die Vorrichtung aufgrund der Presswalzen bzw. -rollen sehr aufwendig und platzintensiv.

Ein weiterer Nachteil ist darin zu sehen, dass die Zugabe der Härter-Komponente zumindest mittels einer Sichtkontrolle nicht möglich ist, so dass nicht sichergestellt ist, dass eine gleichzeitige Zufuhr von Härter-Komponente und Binder-Komponente zur Mischvorrichtung gewährleistet ist.

Es ist daher Aufgabe der vorliegenden Erfindung, ein Gerät zum Vermischen einer Binder-Komponente und einer Härter-Komponente zu einem Mischgut zu schaffen, bei dem ein Teil der Härter-Komponente mit einem Vorlauf gegenüber dem Zulauf der Binder-Komponente und weiteren Härter-Komponenten der Mischvorrichtung zugeführt wird, damit in der Mischkammer der Mischvorrichtung beim Eintritt der Binder-Komponente in der Mischkammer bereits eine geringe Menge an Härter-Komponente vorliegt. Des Weiteren soll ein Ausgleich der Füllhöhen in den Vorratsbehältern für die Binder-Komponente und der Härter-Komponente erreicht werden, um bei Beginn der Abzapfung der beiden Komponenten aus den Vorratsbehältern von gleichen Oberflächenhöhen sowohl der Härter-Komponente als auch der Binder-Komponente in ihren Vorratsbehältern ausgehen zu können.

Diese Aufgabe wird ausgehend von einem Gerät gemäß dem Oberbegriff des Anspruches 1 in Verbindung mit dessen kennzeichnenden Merkmalen gelöst.

Die Erfindung schließt die technische Lehre ein, dass das Gerät zur Herstellung einer gebrauchsfertigen Spachtelmasse für die Verspachtelung von Oberflächen, insbesondere von Fahrzeugkarosserien, durch Vermischen von mindestens zwei Komponenten, insbesondere von einer Binder-Komponente A und einer Härter-Komponente B, vermittels einer Mischvorrichtung aus einem hohlzylinderartigen Statorteil und einem in diesem konzentrisch um eine Längsachse drehbar aufgenommenen Rotorteil und einem zwischen dem Rotorteil und dem Statorteil ausgebildeten, die Mischkammer bildenden Ringspalt zu einem pastösen oder flüssigen Mischgut, wobei die Mischvorrichtung mit mindestens einem Eintrittsstutzen für die Zufuhr der Binder-Komponente A und mindestens einer weiteren Eintrittsöffnung für die Zufuhr der Härter-Komponente B sowie mit einer Abgabeöffnung zur Abgabe des Mischgutes versehen ist, wobei zwischen den Einführungsstutzen und der Abgabeöffnung die Mischkammer ausgebildet ist, innerhalb derer sich die Komponenten A, B miteinander vermischen, einen Standfuß mit zwei senkrecht stehenden, säulenartigen im oberen Bereich über eine Querstrebe verbundene Streben umfasst, zwischen denen ein eine Tragplatte bildender Abfüllkopf mit Halterungen und Aufnahmen für einen Vorratsbehälter für die Binder-Komponente A und für drei Vorratsbehälter für die Härter-Komponente B, B1, B2 mit in den Vorratsbehältern geführten und mit Hydraulikzylindern verbundenen Kolbenstangen angeordnet ist, wobei ein Anbring- und Führungselement für die Kolbenstangen oberhalb der Vorratsbehälter und eine erste Antriebsvorrichtung für das Betätigen der Hydraulikzylinder bzw. der Kolbenstangen für den Vorratsbehälter für die Binder-Komponente A und für zwei Vorratsbehälter der drei Vorratsbehälter für die Härter-Komponente B, B1, B2 und für die Mischvorrichtung eine zweite Antriebsvorrichtung und eine dritte Antriebsvorrichtung für das Betätigen des Hydraulikzylinders bzw. der Kolbenstange für den dritten Vorratsbehälter für die Härter-Komponente B2 vorgesehen sind, wobei die drei motorischen Antriebsvorrichtungen in einem Programmschaltwerk bzw. einer Steuervorrichtung derart zusammengeführt sind, dass vor Beginn des Mischprozesses und der Betätigung der Hydraulikzylinder bzw. der Kolbenstangen für den Vorratsbehälter für die Binder-Komponente A und für die beiden Vorratsbehälter für die Härter-Komponenten B, B1, die dritte Antriebsvorrichtung für den dritten Vorratsbehälter für die Härter-Komponente B2 unabhängig von allen anderen Funktionen in Betrieb gesetzt wird, so dass vor Beginn des eigentlichen Mischprozesses ein Vorlauf an Härter-Komponente B2 etwa 1 Sekunden lang erfolgt, wobei nach Beginn der Drehbewegung des Rotorteils der Mischvorrichtung und der Zuführung der Binder-Komponente A und der Härter-Komponenten B, B1 die dritte Antriebsvorrichtung für den dritten Vorratsbehälter für die Härter-Komponente B2 mit einem Nachlauf von 1 Sekunde für eine weitere Zufuhr an Härter-Komponente B2 betrieben wird, wobei bei vollständiger Entleerung des dritten Vorratsbehälters für die Härter-Komponente B2 und eine von der in einem kastenartigen Behälter auf der Querstrebe der beiden Streben des Standfußes angeordneten dritten Antriebsvorrichtung angetriebene Zahnstange als Kolbenstange den unteren Bereich des dritten Vorratsbehälters für die Härter-Komponente B2 erreicht hat, bei einer weiteren Abwärtsbewegung den kastenartigen Behälter, der einseitig vermittels eines Scharniers an der Längsstrebe befestigt ist, derart anhebt, dass der kastenartige Behälter etwa 2 mm angehoben wird, wobei über diese Bewegung des kastenartigen Behälters eine optische Signaleinrichtung in Betrieb und die gesamte Einrichtung zum Auswechseln des leeren dritten Vorratsbehälters für die Härter-Komponente B2 gegen einen vollen Vorratsbehälter außer Betrieb gesetzt wird.

Vorteilhafte Weiterbildungen der Erfindung sind in den abhängigen Ansprüchen angegeben.

So sieht eine weitere Ausführungsform vor, dass der Standfuß des Gerätes einen als Tragplatte ausgebildeten Abfüllkopf zur Aufnahme des Vorratsbehälters für die Binder-Komponente A und der drei Vorratsbehälter für die Härter-Komponenten B, B1, B2 aufweist, wobei die vier Vorratsbehälter rutschfest oder ortsfest auf dem Abfüllkopf positioniert sind und mit ihren Austrittsöffnungen mit Eintrittsöffnungen von Zuführungskanälen in dem Abfüllkopf korrespondieren, deren Austrittsöffnungen mit den Einführungsstutzen für die Binder-Komponente A und für die Härter-Komponenten B, B1, B2 der Mischvorrichtung oder den Einführstutzen für die Härter-Komponenten B, B1, B2 eines gegen die Mischvorrichtung austauschbaren Auffangbehältern zur Aufnahme und Entsorgung der durch Überfüllung vorgegebenen Menge an Härter-Komponente B, B1, B2 in den Vorratsbehältern für die Härter-Komponenten B, B1, B2 in Wirkverbindung bringbar sind, und wobei die Vorratsbehälter in ihren Innenräumen die Behälterinhalte beaufschlagende plattenförmige Kolben mit vermittels motorisch betreibbaren Hydraulikzylindern oder anderweitig ausgebildeten Antriebsvorrichtungen oder durch Handbetätigung in Behälterlängsrichtung bewegbaren Kolbenstangen aufweisen, vermittels der die Inhalte der Vorratsbehälter für die Binder-Komponente A und für die Härter-Komponenten B, B1, B2 in die Mischvorrichtung oder um Teilinhalte der Vorratsbehälter für die Härter-Komponenten B, B1, B2 in den Auffangbehälter pressbar sind.

Des Weiteren geht die Erfindung dabei von dem Sachverhalt aus, dass die Füllhöhen der Härter-Komponente B und der Binder-Komponente A in ihren Vorratsbehälter unterschiedlich sind, was dazu führt, dass Mischungsverhältnisse zwischen den beiden Komponenten zu Beginn der Abzapfung erhalten werden, die eine größere Menge an Härter-Komponenten enthalten, so dass ein vorgegebenes und auch erforderliches Mischungsverhältnis nicht erhalten wird. Bereits beim Beginn der Abzapfung der Komponenten aus ihren Vorratsbehältern in einer für die Mischung erforderlichen Menge ist es nämlich zwingend notwendig, dass die Oberflächenhöhe sowohl der Binder-Komponente A in ihrem Vorratsbehälter als auch der Härter-Komponente B, B1 in ihren Vorratsbehältern genau egalisiert sind. Aus diesem Grunde sind die Füllhöhen über den Vorratsbehälter für die Härter-Komponente B, B1 größer als die Füllhöhe der Binder-Komponente A in ihrem Vorratsbehälter. Diese Überfüllung beträgt in den meisten Fällen etwa 10 mm. Beim Einsetzen eines neuen Vorratsbehälters für die Binder-Komponente A und der Vorratsbehälter für die Härter-Komponenten B, B1 in das Mischgerät ist zuerst ein Gleichklang aller drei Komponente A, B, B1 herzustellen. Dies wird dadurch erreicht, dass von Hand eine an den Kolbenstangen vorgesehene griffartige Handhabe betätigt wird, mit dem zuerst die Kolbenstangen in den Vorratsbehältern für die Härter-Komponenten B, B1 so weit bewegt werden, bis die überfüllte Menge an Härter-Komponente B, B1 aus den Vorratsbehältern herausgedrückt ist und in den in das Gerät eingesetzten Auffangbehälter eingebracht ist. Die Betätigung des Handgriffes erfolgt dabei solange, bis der plattenförmige Kolben in dem Vorratsbehälter für die Binder-Komponente A diese beaufschlagt hat; dann ist auch die überfüllte Menge an Härter-Komponente B, B1 herausgedrückt.

Um die Füllhöhe der Härter-Komponenten B, B1 auf die Füllhöhe der Binder-Komponente A zu bringen, wird die als Zug-Hebel ausgebildete Handhabe des Gerätes auf halber Höhe der Kolbenstangen bzw. des Pressluft-Zylinders bedient. Nach dem Einsetzen des neuen Vorratsbehälters für die Binder-Komponente A und der beiden kartuschenartigen Vorratsbehälter für die Härter-Komponente B, B1 in das Gerät, wird mit aller Kraft, also mit etwa 30kg die Handhabe nach unten gezogen und zwar so lange, bis es nicht mehr weiter geht. Dann sind alle Füllhöhen egalisiert. Da die Binder-Komponente A gegenüber der Härter-Komponente B, B1 eine weitaus höhere Viskosität aufweist und die Größe der Oberfläche der Binder-Komponente A in ihrem Vorratsbehälter 98% der Gesamtoberfläche ist, ist es nicht möglich, Binder-Komponente A aus ihrem Vorratsbehälter per Handkraft herauszudrücken, denn die Binder-Komponente A benötigt einen Druck von etwa 2 bar, um unten aus der Austrittsöffnung des Vorratsbehälters bzw. aus der Austrittsöffnung des Abfüllkopfes herauszutreten. Bei einem 10kg Vorratsbehälter für die Binder-Komponente A wird ein Druck von 0,15 bar auf der Binder-Komponente A ausgeübt. Dies reicht natürlich nicht, um Binder-Komponente A zu transportieren, denn dafür würden 400kg Zugkraft benötigt. Dies ist nicht erreichbar. Bei einem 3kg Vorratsbehälter für die Binder-Komponente A wird mit 30kg Zugkraft ein Druck von 0,4 bar auf die Binder-Komponente A erzeugt. Dies reicht ebenfalls nicht aus, um Binder-Komponente A aus ihrem Vorratsbehälter in die Mischvorrichtung zu drücken. Die Handkraft reicht somit niemals aus, um Binder-Komponente A herauszupressen. Um die Überfüllung in den Vorratsbehältern für die Härter-Komponente B, B1 zu beseitigen, werden in die Austrittsöffnungen des Abfüllkopfes des Gerätes für die Härter-Komponente B, B1 die Rohrstutzen des Auffangbehälters gesteckt, woraufhin die Handhabe nach unten mit aller Kraft gezogen wird. Es ist dann die Funktionsbereitschaft für die Mischung mit dem Gerät und seiner Mischvorrichtung hergestellt. Der die Menge an Überfüllung der Härter-Komponente B, B1 aufnehmende Auffangbehälter wird dann gegen die Mischvorrichtung ausgewechselt, so dass die Mischung aus Binder-Komponente A und den Härter-Komponenten B, B1 hergestellt werden kann. Für alle nachfolgenden Mischungen ist keine Überfüllung zu beseitigen, dies ist erst wieder der Fall, wenn neue Vorratsbehälter für die Binder-Komponente A und die Härter-Komponente B, B1 in das Gerät eingesetzt werden.

Nach einer Ausführungsform der Erfindung besteht der Auffangbehälter aus einem becherartigen, zylindrischen oder eine andere geometrische Querschnittsform aufweisenden und einseitig geschlossenen Formkörper, dessen Wand zwei nebeneinander liegend angeordnete, mit dem Innenraum des Formkörpers in Verbindung stehende Rohrstutzen aufweist, die so angeordnet und ausgebildet sind, dass der Auffangbehälter vermittels der in die Austrittsöffnungen des Abfüllkopfes für die Härter-Komponenten B, B1 einführbaren Rohrstutzen auf den Abfüllkopf aufsteckbar sind. Wird der Auffangbehälter nicht mehr benötigt, dann wird der Auffangbehälter von dem Abfüllkopf abgezogen und die Mischvorrichtung aufgesteckt.

Der Formkörper des Auffangbehälters weist auf seiner den beiden Rohrstutzen gegenüberliegenden Wandfläche einen Rohrstutzen auf, in den zur Halterung und Zentrierung des Auffangbehälters die am Gerät vorgesehene Klemmeinrichtung bzw. die Antriebswelle für die Mischvorrichtung eingreifend ist.

Die Mischvorrichtung weist einen hohlzylinderartigen Statorteil und einen in diesem konzentrisch um eine Längsachse drehbar aufgenommenen Rotorteil auf, wobei die Mischkammer zwischen dem Statorteil und dem Rotorteil ringspaltartig ausgebildet ist, wobei sich mehrere am Statorteil angeformte erste Mischzähne radial nach innen und mehrere am Rotorteil angeformte zweite Mischzähne radial nach außen in die Mischkammer hinein erstrecken, um vermittels einer Rotationsbewegung des Rotorteils im Statorteil die Mischzähne gegeneinander zu bewegen und eine Vermischung der Komponenten A, B, B1, B2 zu schaffen, wobei der Statorteil drei mit der Mischkammer verbundene Eintrittsöffnungen für die Härter-Komponente B, B1, B2 aufweist.

Der Statorteil trägt an seinem den Eintrittsöffnungen abgekehrten Ende eine ringförmige Halterung, die Befestigungsdurchbrechungen aufweist und die bajonettverschlussartig lösbar und drehbar mit dem Statorteil verbunden ist, wobei die Drehbarkeit vermittels Anschlägen derart begrenzt ist, dass eine Passung der Eintrittsöffnung für die Binder-Komponente A mit der Zuführung für die Binder-Komponente A und gleichzeitig eine Passung der Eintrittsöffnungen für die Härter-Komponente B, B1, B2 mit den Zuführungen für die der Komponenten erreicht wird.

Diese ringförmige Halterung weist zwei sich gegenüberliegende parallel zum umlaufenden Rand der Halterung bogenförmig verlaufende, schlitzförmige Durchbrechungen auf von denen jede schlitzförmige Durchbrechung zwei Führungsabschnitte mit unterschiedlichen Breiten aufweist, von denen der jeweils breitere Führungsabschnitt zum Einführen eines am unteren umlaufenden Rand des Statorteils angeformten L-förmigen Führungsnockens ausgebildet ist, wobei die Breite des breiteren Führungsabschnittes der Länge des freien abgewinkelten Schenkels des Führungsnockens entspricht, und von denen der jeweils schmälere Führungsabschnitt eine Breite aufweist, die der Stärke des an dem unteren umlaufenden Rand des Statorteils angeformten und parallel zur Längsrichtung der Mischvorrichtung verlaufenden Schenkels des L-förmigen Führungsnockens entspricht.

Eine vorteilhafte Ausführungsform der vorliegenden Erfindung sieht vor, dass die Eintrittsöffnungen direkt in die Mischkammer der Mischvorrichtung münden, wobei die Eintrittsöffnung zur Zufuhr der Härter-Komponente dreifach vorhanden ist, um eine redundante Belieferung des Mischgutes mit der Härter-Komponente und um die Möglichkeit zu schaffen, dass Härter-Komponente B2 aus dem dritten Vorratsbehälter mit Vorlauf und Nachlauf der Mischkammer der Mischvorrichtung zugeführt werden kann. Das Erfordernis von einer redundanten Zufuhr der Härter-Komponente beruht auf der Erkenntnis, dass Inhomogenitäten im Mischgut normalerweise durch Lufteinschlüsse in der Härter-Komponente verursacht werden, die sich auch bei sorgfältiger Fertigung der Härter-Komponente in der Praxis nicht sicher vermeiden lassen. Da die Härter-Komponente ein Anteil von weniger als 5 % und bevorzugt von nur etwa 2 % am Gesamtvolumen des Mischgutes aufweist, können bereits kleinste Lufteinschlüsse in der Härter-Komponente zur Folge haben, dass in dem Mischgut Stellen vorhanden sind, die keine Härter-Komponente enthalten und somit nicht aushärten. Da bei der erfindungsgemäßen Vorrichtung bevorzugt zwei Vorratsbehälter für die Härter-Komponente vorgesehen sind und über getrennte Zuführkanäle mit der Mischkammer verbunden sind, kann für den Fall, dass in einem der Zuführkanäle eine Luftblase enthalten sein sollte, der Mischkammer trotzdem über den zweiten Zuführkanal weiterhin die Härter-Komponente zugeführt werden. Die Gefahr, dass in sämtlichen Zuführkanälen gleichzeitig Luftblasen der Härter-Komponente enthalten sein sollten, ist um ein Vielfaches geringer und kann daher vernachlässigt werden. Die Vorrichtung kann beispielsweise für folgende Bindermittelsysteme verwendet werden: Polyesterharze (ungesättigt), Peroxyd-Styrol-Systeme, Epoxid-Harze (zweikomponentig), Polyurethan-Harzsysteme (zweikomponentig), Phenolharz-Systeme, Silicon-Systeme (zweikomponentig), Acrylat-Systeme (zweikomponentig) oder Thiocoll-Systeme (Polidisulfid-Systeme).

Um die Zufuhr der Härter-Komponente B, B1, B2 mittels einer Sichtkontrolle kontrollieren zu können, ist vorgesehen, dass zumindest der Statorteil aus einem transparenten Material gebildet ist, wobei das transparente Material aus der Gruppe der Kunststoffe, umfassend ein Polycarbonat (PC), ein Polymethylmetacrylat (PMMA) und/oder ein Styrol-Acryl-Nitril (SAN), ausgebildet ist. Dabei ist es weiterhin von besonderem Vorteil, die Härter-Komponente einzufärben. Durch den transparenten Statorteil ist die Zufuhr der Härter-Komponente sichtbar, so dass der Bediener während des Betriebes der Mischvorrichtung die Zufuhr der Härter-Komponente sehenden Auges kontrollieren kann.

Als eine weitere vorteilhafte Ausführung der Erfindung ist vorgesehen, dass die ersten Mischzähne auf zumindest einer ersten Mischzahnebene und die zweiten Mischzähne auf zumindest einer zweiten Mischzahnebene angeordnet sind, und die Mischzahnebenen axial in Richtung der Längsachse etagenartig zueinander versetzt sind, so dass die zweiten Mischzähne des Rotorteils in den jeweiligen Zwischenräumen der ersten Mischzähne des Statorteils radial umlaufen. Insgesamt können von den ersten Mischzähnen des Statorteils fünf Mischzahnebenen vorgesehen sein, so dass in den jeweiligen Zwischenräumen die zweiten Mischzähne des Rotorteils auf insgesamt vier Mischzahnebenen angeordnet sind. Das Mischgut durchläuft dabei von der Eintrittsöffnung bis zur Abgabeöffnung die insgesamt fünf Mischzahnebenen der ersten Mischzähne sowie die vier Mischzahnebenen der zweiten Mischzähne.

Vorteilhafterweise weisen die Mischzähne jeweils Stimseitenflächen auf, welche jeweils in Axialrichtung aneinander zugewandt sind, um diese bei einer axialwirkenden Kraft zwischen dem Statorteil und dem Rotorteil gegeneinander zu positionieren. Weiterhin sind die Stimseitenflächen in Bezug zu einer normal zur Rotationsachse angeordneten Ebene unter einem Winkel α geneigt, so dass die Stirnseitenflächen während des Mischvorganges aufeinander abgleiten, ohne dass von den Mischzähnen Material abträgt und in das Mischgut gelangt. Dadurch ist es möglich, die Länge des Rotorteils in Richtung der Rotationsachse kurz zu halten, so dass nach Gebrauch des Rotorteils bzw. des Statorteils nur eine entsprechende Restmenge des Mischgutes in der Mischkammer verbleibt. Die Vorrichtung ermöglicht dadurch einen geringen Verbrauch der Komponenten. Während des Mischvorganges werden die Mischzähne des Rotorteils und die Mischzähne des Statorteils durch den Förderdruck der Komponenten gegeneinander gedrückt, wobei die schräg zueinander verlaufenden Stirnseitenflächen aufeinander gleiten, ohne dass von den Zähnen Werkstoff abrasiv abgetragen wird und in das Mischgut gelangt. Dabei bilden die Komponenten des Mischgutes zwischen den aufeinander gleitenden Stirnseitenflächen einen dünnen Film, der als Gleitschicht wirkt. Der Winkel a, unter dem die Mischzähne gegeneinander der normal zur Rotationsachse angeordneten Ebene geneigt sind, kann mindestens 5°, gegebenenfalls 10° und bevorzugt mindestens 15° betragen.

Eine weitere vorteilhafte Ausführungsform der Erfindung sieht vor, dass der Statorteil eine Stützlagerfläche umfasst, an welcher der Rotorteil mit dem an diesem angeformten Mischzähnen stirnseitig anliegt und abgleitet um eine axiale Gleitlageranordnung zu schaffen. Zunächst wird der Rotorteil über eine den Eintrittsöffnungen abgewandten offenen Endseite in den Statorteil eingeführt, bis dieser an die Stützlagerfläche mit den Mischzähnen anstößt. Dadurch wird eine einseitige axiale Lagerung des Rotorteils im Statorteil ermöglicht. Die Geometrie des Rotorteils ist derart angepasst, so dass die zweiten Mischzähne des Rotorteils beim stirnseitigen Anschlag der Mischzähne an die Stützlagerfläche in den jeweiligen Zwischenräumen der ersten Mischzähne des Statorteils liegen. Die axiale Abstützung des Rotorteils erfolgt in der Fügerichtung des Rotorteils in den Statorteil gegen die Stützlagerfläche, wobei bei einem Axialspiel in Richtung der Öffnung des Statorteils die Gefahr besteht, dass die ersten und zweiten Mischzähne aneinander geraten. Aufgrund der Stirnseitenflächen, welche unter einem Winkel α angeordnet sind, wird der Rotorteil in Richtung der Fügerichtung, aus der der Rotorteil in den Statorteil eingeschoben wird, gegen die Stützlagerfläche zurückgeführt.

Eine weitere vorteilhafte Ausgestaltung des Gerätes besteht darin, dass das Traggestell des Gerätes eine zu öffnende, bevorzugt transparente Schutzabdeckung zur Abdeckung der Vorratsbehälter aufweist, wobei besonders bevorzugt ein Schutzschalter in Wirkverbindung mit der Schutzabdeckung und dem Gerät vorgesehen ist, der das Gerät abschaltet, wenn die Schutzabdeckung geöffnet ist, die aus einem glasklaren Kunststoff oder einem anderen geeigneten Material besteht und türartig ausgebildet ist.

Des Weiteren weist das Traggestell des Gerätes vorder- und/oder rückseitig Aufnahmebehälter zur Aufnahme von verbrauchten oder von neuen Mischvorrichtungen auf.

Die Erfindung wird anhand von Ausführungsbeispielen in den Zeichnungen dargestellt. Es zeigen:
- Fig. 1: eine schaubildliche Ansicht eines erfindungsgemäßen Gerätes zur Herstellung einer gebrauchsfertigen Spachtelmasse für die Verspachtelung von Oberflächen z. B. von Fahrzeugkarosserien mit einer Vorrichtung zum Vermischen von zwei Komponenten aus einem Statorteil und einem Rotorteil, wobei beide Teile ineinander eingreifende Mischzähne aufweisen,
- Fig. 1A: eine schaubildliche Ansicht des Gerätes mit einer aus zwei über eine Querstrebe verbundene Säulen bestehenden Halterung für die Kolbenstangen und ihre Antriebe für die Vorratsbehälter für die Binder-Komponente und für die Härter-Komponente und mit einer geöffneten Schutzabdeckung,
- Fig. 1B: eine schaubildliche Ansicht des Gerätes mit einer aus zwei über eine Querstrebe verbundene Säulen bestehenden Halterung für die Kolbenstangen und ihre Antriebe und mit der geschlossenen Schutzabdeckung,
- Fig. 1C: eine schaubildliche Ansicht des Gerätes mit einem Vorrats-behälter für die Binder-Komponente und mit drei Vorratsbehältern für die Härter-Komponente,
- Fig. 1D: eine Seitenansicht des Gerätes nach Fig. 1C,
- Fig. 1E: eine schaubildliche Ansicht des Gerätes mit drei Vorratsbehältern für die Härter-Komponente,
- Fig. 1F: eine weitere schaubildliche Ansicht des Gerätes,
- Fig. 2: eine schaubildliche Ansicht eines Teils des Gerätes mit einem Vorratsbehälter für die Binder-Komponente und mit drei Vorratsbehältern für die Härter-Komponente,
- Fig. 3: in einer schaubildlichen Ansicht einen als Standplatte für die Vorratsbehälter, für die Binder-Komponente ausgebildeten Abfüllkopf mit Einlass- und Austrittsöffnungen, Eintrittsöffnungen für die Komponenten und Austrittsöffnungen, die über Zuführungskanäle mit den Eintrittsöffnungen verbunden sind, wobei dem Abfüllkopf eine Mischvorrichtung und ein Auffangbehälter zur Aufnahme von aus einer Überfüllung in den Vorratsbehältern für die Härterkomponenten stammenden Mengen an Härter-Komponenten zugeordnet sind.
- Fig. 4: eine Vorderansicht des Abfüllkopfes mit den Austrittsöffnungen für die Binder-Komponente und für die beiden Härter-Komponenten,
- Fig. 5: eine Ansicht von oben auf den Abfüllkopf mit den Eintrittsöffnungen für die beiden Härter-Komponenten,
- Fig. 6: eine schematische teilweise geschnittene Ansicht des Abfüllkopfes mit aufgesetzten Vorratsbehältern für die Binder-Komponente und für die beiden Härter-Komponenten mit dem Abfüllkopf zugeordneten Auffangbehälter,
- Fig. 7: teils in Ansicht teils in einem senkrechten Schnitt den Vorratsbehälter für die Binder-Komponente und den beiden Vorratsbehältern mit gegenüber der Binder-Komponente überfüllten Härter-Komponenten,
- Fig. 8: teils in Ansicht, teils in einem senkrechten Schnitt den Vorratsbehälter für die Binder-Komponente und den beiden Vorratsbehältern für die Härter-Komponenten, nachdem die die Überfüllung der Härter-Komponenten aus ihren Vorratsbehältern herausgedrückt worden ist, wobei die aus dem Vorratsbehältern herausgedrückte Menge an überfüllter Härter-Komponente in den Auffangbehälters,
- Fig. 9: eine schaubildliche Ansicht des Auffangbehälters,
- Fig. 10: einen senkrechten Längsschnitt durch den Auffangbehälter,
- Fig. 11: eine schaubildliche Ansicht der aus dem Statorteil und dem Rotorteil bestehenden Mischvorrichtung mit steuerbaren Zuführungen für eine Binder-Komponente und zwei Härter-Komponenten aus mit der Mischkammer verbundenen Vorratsbehältem, wobei der Statorteil an seinem den Zuführun-gen für die Komponenten abgekehrten Ende eine mit dem Statorteil lösbar verbundene und mit dem Gerät fest verbundene ringförmige Halterung,
- Fig. 12: eine vergrößerte Ansicht von oben auf die ringförmige Halterung,
- Fig. 13: eine vergrößerte Ansicht von unten auf die ringförmige Halterung,
- Fig. 14: einen senkrechten Schnitt gemäß Linie XIV-XIV in Fig. 12,
- Fig. 15: eine Ansicht von unten auf den Statorteil der Mischvorrichtung, mit den in die Halterung eingreifenden Führungsnocken,
- Fig. 16: eine Seitenansicht eines Teils des Statorteils mit den angeformten Führungsnocken,
- Fig. 17: eine schaubildliche Explosionsdarstellung der Mischvorrichtung mit dem Statorteil und dem Rotorteil,
- Fig. 18: eine schaubildliche Ansicht des Stators der Mischvorrichtungen mit den Zuführungen für die Binder-Komponente und für die Härter-Komponente,
- Fig. 19: eine Ansicht der Mischvorrichtung, in der der Rotorteil im Statorteil eingesetzt ist und der Statorteil geschnitten dargestellt ist,
- Fig. 20: einen Querschnitt durch die Mischvorrichtung mit geschnittenem Statorteil sowie geschnittenem Rotorteil,
- Fig. 21: einen Längsschnitt durch den Statorteil,
- Fig. 22: eine Draufsicht auf den Statorteil, wobei die Draufsicht endseitig aus Richtung der Eintrittsöffnungen erfolgt,
- Fig. 23: eine Seitenansicht des Rotorteils der Mischvorrichtung und
- Fig. 24: einen Teilquerschnitt durch den Rotorteil sowie dem Statorteil entlang einer ringförmig umlaufenden Mischzone innerhalb der Mischkammer, wobei die Zähne des Statorteils schraffiert und die Zähne des Rotorteils unschraffiert dargestellt sind.

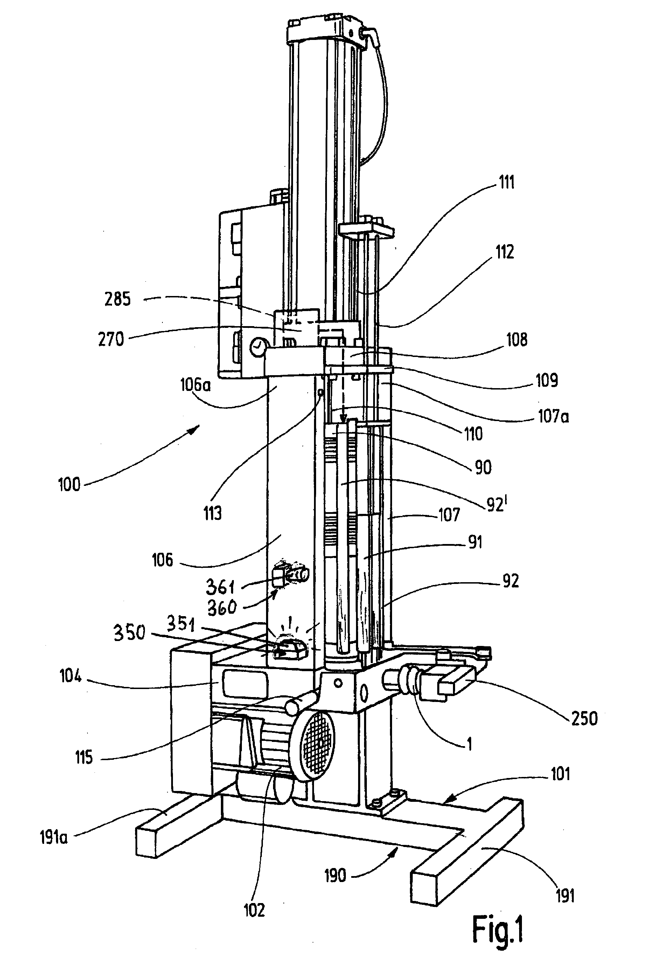

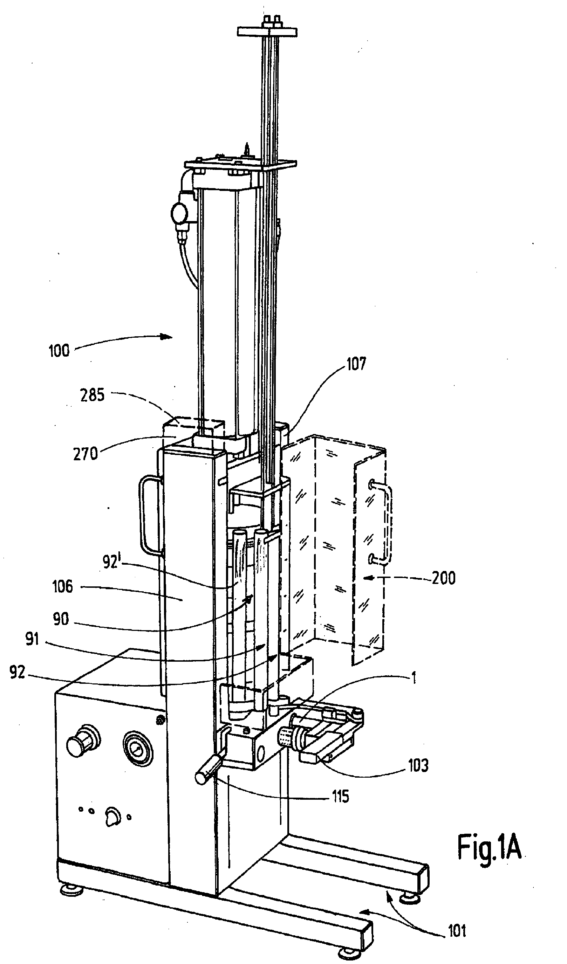

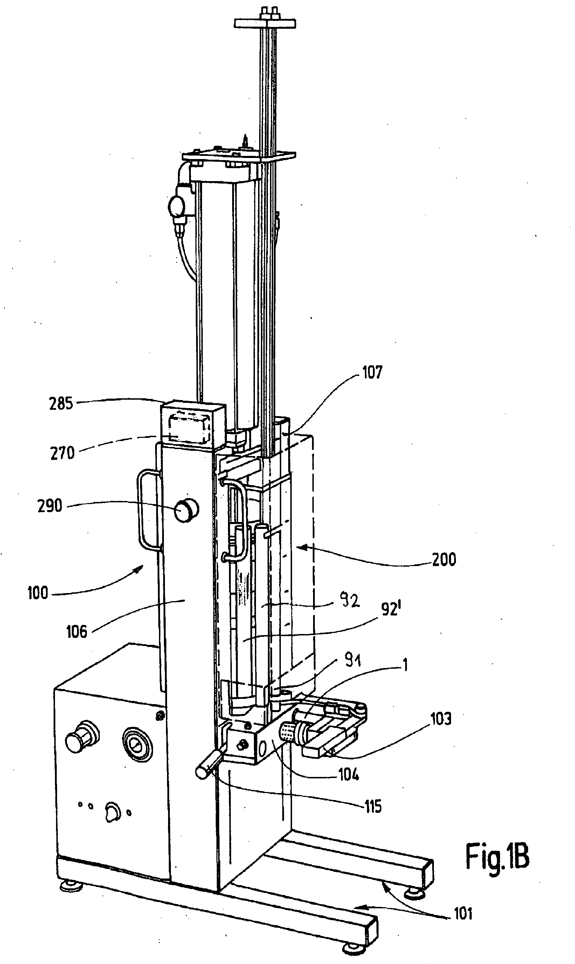

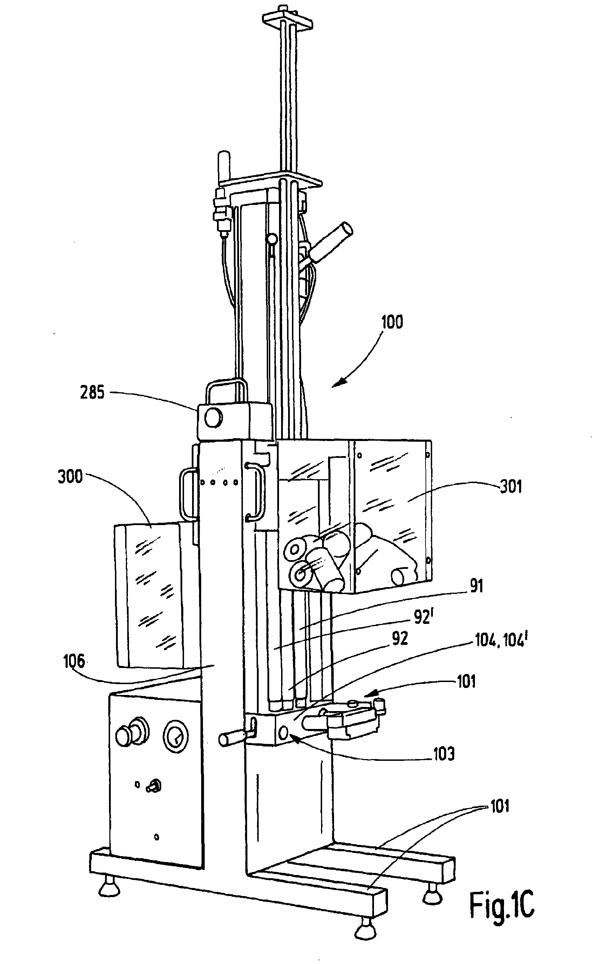

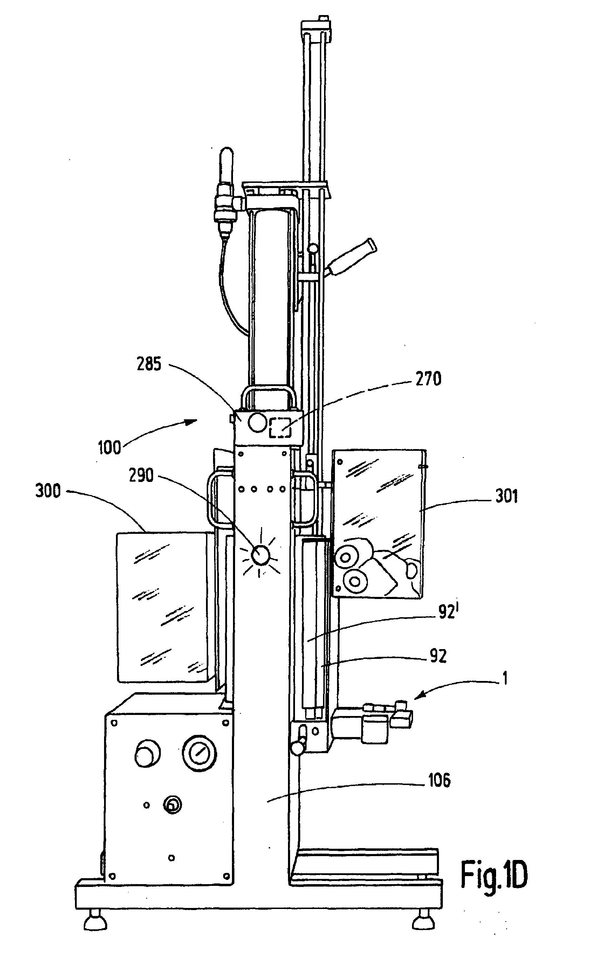

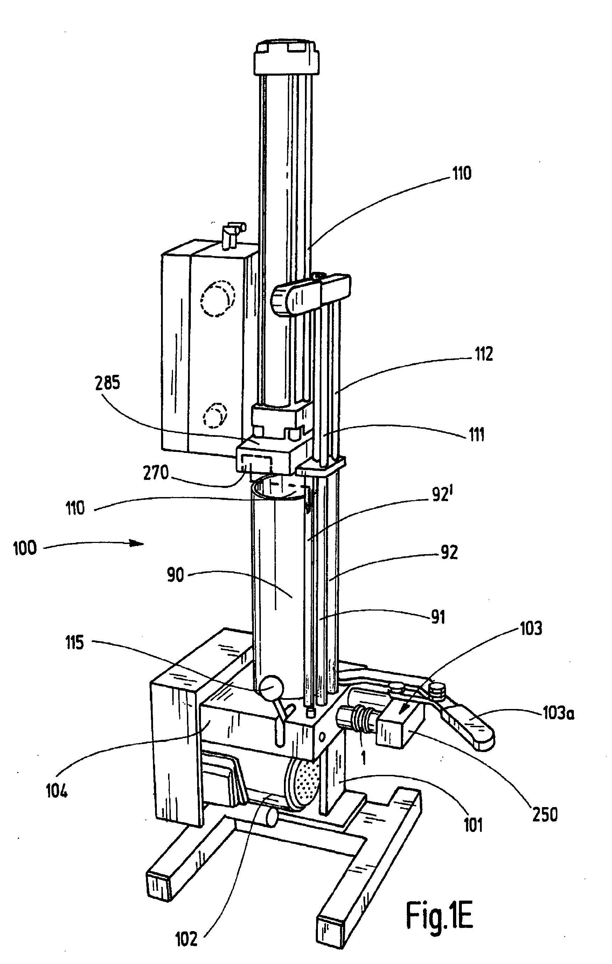

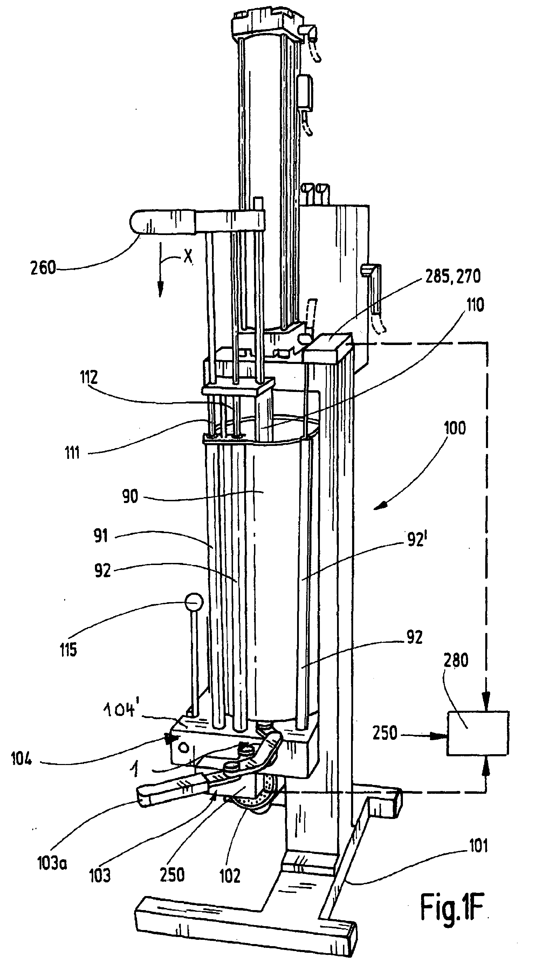

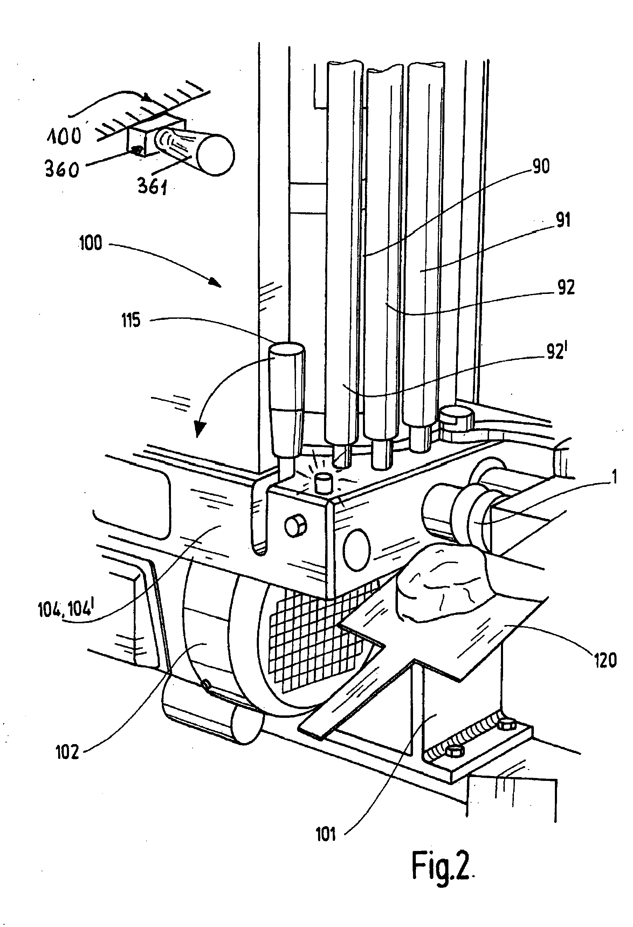

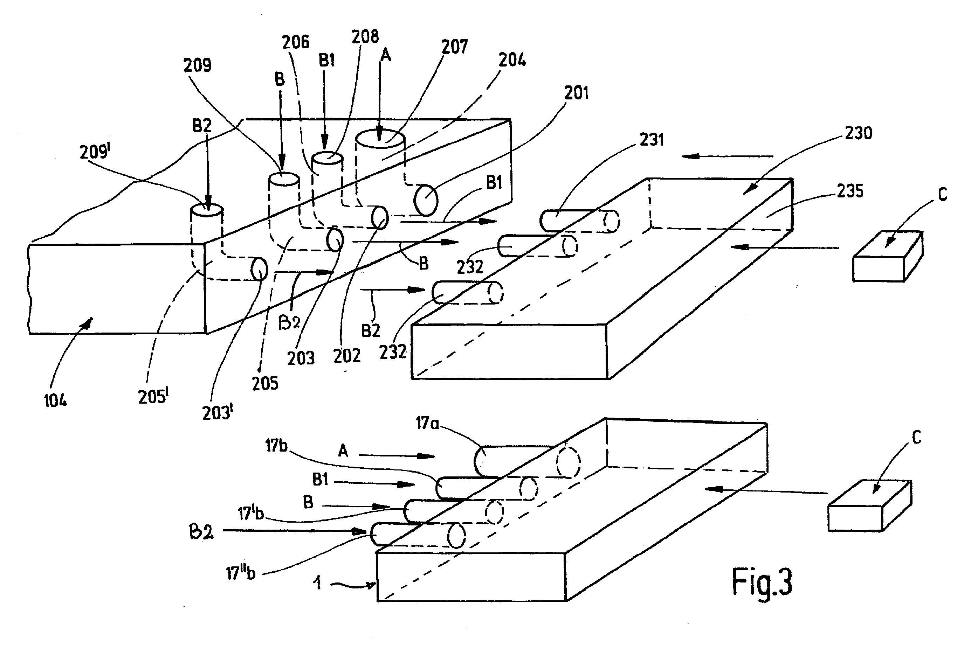

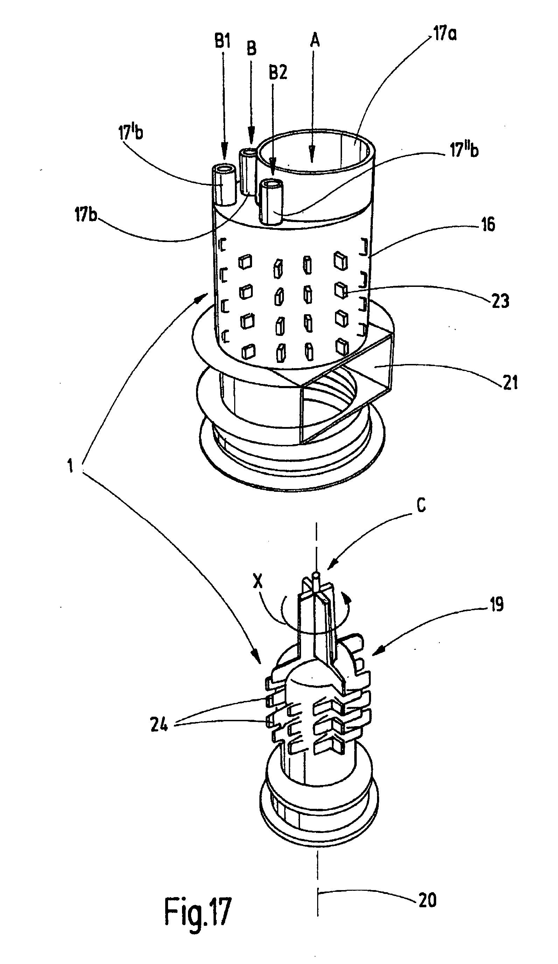

Das in Fig. 1 dargestellte Gerät 100 zur Herstellung einer gebrauchsfertigen Spachtelmasse für die Verspachtelung von Oberflächen, die' beispielsweise Fahrzeugkarosserien betreffen, aus einer Binder-Komponente A und einer Härter-Komponente B umfasst einen Standfuß 101 mit einer ersten Antriebsvorrichtung 102 und einer Halterung 103 für eine Mischvorrichtung 1, die aus einem Statorteil 16 und einem Rotorteil 19 besteht (Fig. 17), wobei zwischen den beiden zylindrischen Teilen 16 und 19 ein Ringspalt ausgebildet ist, der die Mischkammer 14 bildet. Die Halterung 103 mit ihrer Handhabe 103a nimmt gleichzeitig eine zweite Antriebsvorrichtung 250 für die Mischvorrichtung 1 auf (Fig. 1, 1E und 1F). Der Standfuß 101 wird gebildet von zwei senkrecht stehenden, säulenartigen Streben 106, 107, die im Bereich ihrer oberen freien Enden über eine Querstrebe 108 miteinander verbunden sind. Zwischen den senkrechten Streben 106, 107 ist der als Tragplatte 104' ausgebildete Abfüllkopf 104 angeordnet (Fig. 1A). Dieser plattenförmige Abfüllkopf 104 dient gleichzeitig als Trag- und Standplatte 104' zur Aufnahme eines Vorratsbehälters 90 für die Binder-Komponente A und bei der in Fig. 1B, 1C und 2 gezeigten Ausführungsform drei Vorratsbehälter 91, 92, 92' für Härter-Komponenten B, B1, B2 auf. Die Vorratsbehälter 90, 91, 92, 92' sind rutschfest und ortsfest auf den Abfüllkopf 104 positioniert. Die Austrittsöffnungen der Vorratsbehälter 90, 91, 92, 92' korrespondieren mit den Eintrittsöffnungen 207, 208, 209, 209' von Zuführungskanälen 204, 205, 206, 206' in dem Abfüllkopf 104 (Fig. 2), wobei diese Zuführungskanäle wiederum in Verbund mit den Einführungsstutzen 17a, 17b, 17'b, 17"b der Mischvorrichtung 1 stehen, wenn das Gerät 100 in Betrieb genommen wird. Somit korrespondieren die Austrittsöffnungen der Vorratsbehälter 90, 91, 92, 92' mit den in dem Abfüllkopf 104 ausgebildeten Eintrittsöffnungen 207, 208, 209, 209' der Zuführungskanäle 204, 205, 206, 206', deren Austrittsöffnungen 201, 202, 203, 203' bezeichnet sind (Fig. 3, 4 und 5).

Bevorzugterweise besteht der Standfuß 101 aus einem Doppel-T-Profil 101a, 101b oder aus zwei zueinander verlaufenden Holmen, die über das Gerät selbst miteinander verbunden sind (Fig. 1A).

Die vier Vorratsbehälter 90, 91, 92, 92' sind rutschfest und ortsfest auf dem Abfüllkopf 104 positioniert.

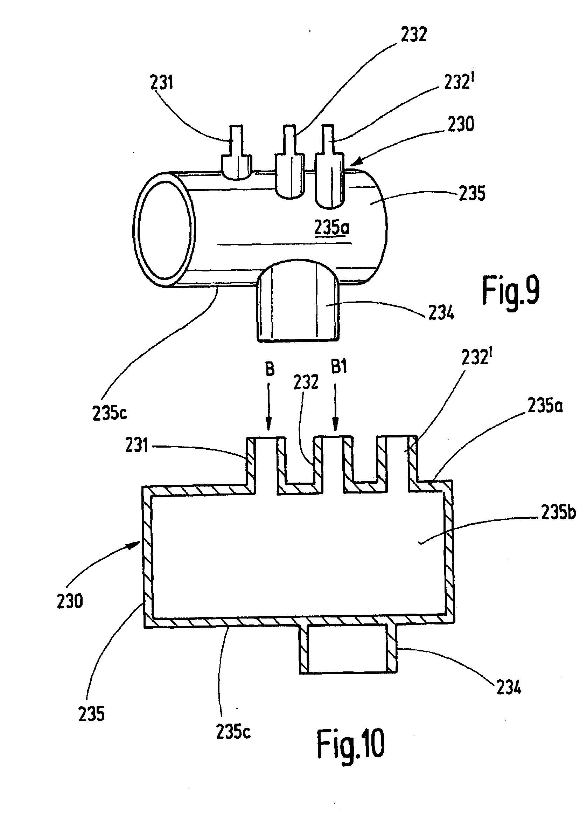

Die Austrittsöffnungen 201, 202, 203, 203' der Zuführungskanäle 204, 205, 206, 206' stehen mit den Einführungsstutzen 17a, 17b, 17'b, 17"b für die Binder-Komponente A und die Härter-Komponenten B, B1, B2 der Mischvorrichtung 1 oder den Einführungsstutzen 231, 232, 232' für die Härter-Komponenten B, B1, B2 eines gegen die Mischvorrichtung 1 austauschbaren Auffangbehälter 230 zur Aufnahme und Entsorgung der durch Überfüllung vorgegebenen Menge an Härter-Komponenten B, B1, B2 in den Vorratsbehältern 91, 92, 92' für die Härter-Komponenten B, B1, B2 in Verbindung (Fig. 3, 8 und 10).

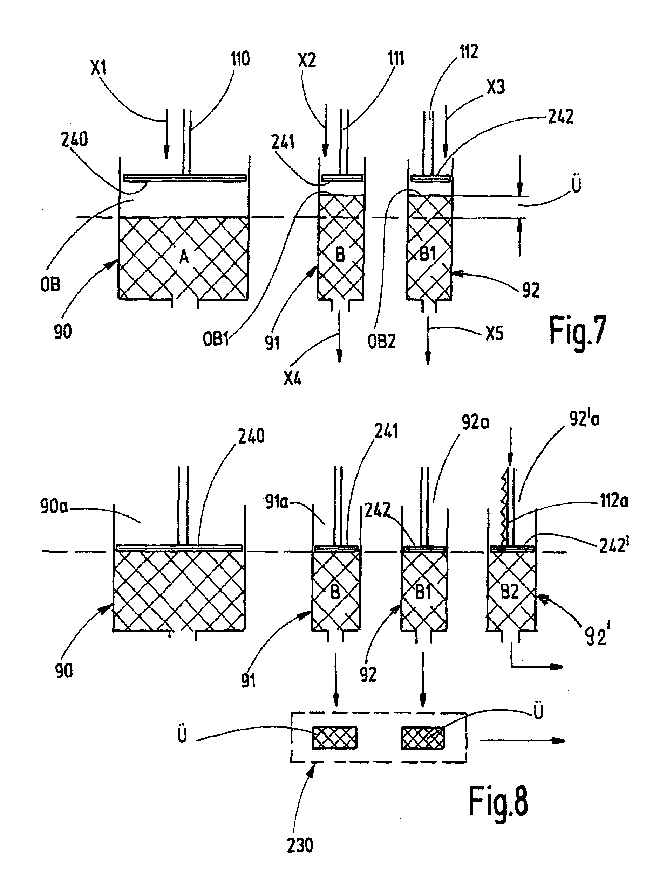

Die Vorratsbehälter 90, 91, 92, 92' weisen in ihren Innenräumen 90a, 91a, 92a, 92' die Behälterinhalte beaufschlagende plattenförmige Kolben 240, 241, 242, 242' mit vermittels motorisch betreibbaren Hydraulikzylindern oder anderweitig ausgebildeten Antriebsvorrichtungen oder durch Handbetätigung in Behälterlängsrichtung bewegbaren Kolbenstangen 243, 244, 245, 245' auf, vermittels der die Inhalte der Vorratsbehälter 90, 91, 92, 92' für die Binder-Komponente A und für die Härter-Komponenten B, B1, B2 in die Mischvorrichtung 1 oder um Teilinhalte der Vorratsbehälter 91, 92, 92' für die Härter-Komponenten B, B1, B2 in den Auffangbehälter 230 pressbar sind (Fig. 7 und 8).

Der Auffangbehälter 230 besteht aus einem becherartigen zylindrischen oder eine andere geometrische Querschnittsform aufweisenden und bevorzugterweise einseitig geschlossenen Formkörper 235, dessen Wand 235c zwei nebeneinander liegend angeordnete, mit dem Innenraum 235b des Formkörpers 235 in Verbindung stehenden Rohrstutzen 231, 232 für die Zuführung von Härter-Komponenten aufweist, die so angeordnet und ausgebildet sind, dass der Auffangbehälter 230 vermittels der in die Austrittsöffnungen 202, 203 des Abfüllkopfes 104 für die Härter-Komponente B, B1, B2 einführbaren Rohrstutzen 231, 232, 232' auf den Abfüllkopf 104 aufsteckbar sind.

Wird Härter-Komponente aus mehreren Vorratsbehältern dem Abfüllkopf 104 zugeführt, so weist der Auffangbehälter 230 eine entsprechende Anzahl von Rohrstutzen 231,232,232' auf.

Vermittels eines motorisch betriebenen Hydraulikzylinders oder mehrerer motorisch betreibbarer Hydraulikzylinder 110, 111, 112, 112' werden Kolbenstangen betrieben, deren freie in den Innenräumen 90a, 91a, 92a, 92'a der Vorratsbehälter 90, 91, 92, 92' liegenden Enden plattenförmige Kolben 240 241, 242, 242' tragen, so dass bei Betrieb der Hydraulikzylinder 110, 111, 112, 112' die Kolbenstangen mit den in den Innenräumen der Vorratsbehälter 90, 91, 92, 92' liegenden Kolben 240, 241, 242, 242' in Kolbenstangenlängsrichtung bewegt werden, um die Inhalte der Vorratsbehälter 90, 91, 92, 92' in die Mischvorrichtung 1 zu pressen (Fig. 1, 1A, 1B, 1C und 1D). Die Betätigung des Motors der Antriebsvorrichtung 102 für die Betätigung der Hydraulikzylinder, d. h. das Ein- und Ausschalten, wird über den Betätigungshebel 115 gesteuert, so dass die hergestellte Spachtelmasse in der jeweils gewünschten Menge auf einen Spachtel 120 entnommen werden kann, wobei auch gleichzeitig das Ein- und Ausschalten des Antriebes 250 für die Mischvorrichtung 1 erfolgt (Fig. 1 und 2).

Die Fig. 1A, 1B, 1C und 1D zeigen weitere räumliche Darstellungen des Gerätes 100 zu Fig. 1. Auf dem Abfüllkopf 104 sind Behälteraufnahmen für die Binder-Komponente A und für die Härter-Komponenten B, B1, B2 vorgesehen. Innerhalb der Behälteraufnahmen können profilierte Abschnitte vorgesehen sein, um die Standfestigkeit der Vorratsbehälter 90, 91, 92, 92' zu gewährleisten.

Das in Fig. 1 gezeigte Gerät 100 umfasst eine Vorrichtung 1 zum Mischen von zwei Komponenten, nämlich der Binder-Komponente A und der Härter-Komponenten B, B1, B2. Dieser Mischvorrichtung 1 werden die einzelnen Komponenten A, B, B1, B2 über die Zuführungskanäle 204, 205, 206, 206' des Abfüllkopfes 104 zugeführt.

Nach Fig. 1C und Fig. 2 weist das Gerät 100 neben dem Vorratsbehälter 90 für die Binder-Komponente A zwei Vorratsbehälter 91, 92 für die Härter-Komponenten B, B1 und darüber hinaus noch einen weiteren Vorratsbehälter 92' für eine weitere Härter-Komponente B2 auf. Dieser Vorratsbehälter 92' ist auf dem Abfüllkopf 104 bzw. der Tragplatte 104' standsicher angeordnet. Sein Inhalt wird analog der anderen Vorratsbehälter 91, 92 bei Inbetriebnahme des Gerätes aus dem Behälter hausgedrückt und gelangt über den Abfüllkopf 104 in die Mischvorrichtung 1, wobei die Austrittsöffnung des Vorratsbehälters 92' mit einem Zuführungskanal 206' in dem Abfüllkopf 104 bzw. in der Tragplatte 104' korrespondiert (Fig. 3, 4, 5 und 6). Das Herausdrücken der Härter-Komponente B2 aus dem Vorratsbehälter 92' erfolgt vermittels der Antriebsvorrichtung 270 über eine hydraulisch bzw. motorisch angetriebene Kolbenstange 112' mit einer endseitig angebrachten Kolbenplatte 242', wobei die Kolbenstange 112' als Zahnstange ausgebildet ist, die mit der dritten Antriebsvorrichtung 270 in funktioneller Wirkverbindung steht. Für die Betätigung des Hydraulikzylinders bzw. der Kolbenstange 112' (Fig. 7 und 8) ist die dritte Antriebsvorrichtung 270 auf der säulenartigen Strebe 106 des Gerätes 100 in einem kastenartigen Behälter 285 angeordnet. Die motorischen Antriebsvorrichtungen 102, 270 und die motorische Antriebsvorrichtung 250 für die Mischvorrichtung 1 sind in einem Programmschaltwerk bzw. einer Steuereinrichtung 280 zusammengeführt (Fig. 1C) und zwar derart, dass vor Beginn des Mischprozesses, also vor dem Zuführen der Binder-Komponente A und der Härter-Komponenten B, B1 und der Betätigung des Hydraulikzylinders bzw. der Kolbenstange für den Vorratsbehälter 90 für die Binder-Komponente A und für die beiden Vorratsbehälter 91, 92 für die Härter-Komponenten B, B1 die Antriebsvorrichtung 270 für den dritten Vorratsbehälter 92' für die Härter-Komponente B2 unabhängig von allen anderen Funktionen in Betrieb gesetzt wird, so dass vor Beginn des eigentlichen Mischprozesses ein Vorlauf an Härter-Komponente B2 etwa 1 Sekunde lang erfolgt, wobei nach Beginn der Drehbewegung des Rotorteils 19 der Mischvorrichtung 1 die dritte Antriebsvorrichtung 270 für den dritten Vorratsbehälter 92' für die Härter-Komponente B2 mit einem Nachlauf von 1 Sekunde für eine weitere Zufuhr an Härter-Komponente B2 betrieben wird, wobei bei vollständiger Entleerung des dritten Vorratsbehälters 92' für die Härter-Komponente B2 eine von der in einem kastenartigen Behälter 285 auf der Querstrebe 108 oder der beiden Streben 106 des Standfußes 101 angeordneten dritten Antriebsvorrichtung 270 angetriebenen Zahnstange den unteren Bereich des dritten Vorratsbehälters 92' für die Härter-Komponente B2 erreicht. Die noch weiterlaufende und sich abwärts bewegende in der Zeichnung nicht dargestellte Zahnstange hebt den kastenartigen Behälter 285, der einseitig vermittels eines Scharniers an der Querstrebe 108 befestigt ist, derart an, dass der kastenartige Behälter 285 etwa 2 mm angehoben wird, wobei über diese Bewegung des kastenartigen Behälters 285 eine optische Signaleinrichtung 290 in Betrieb und die gesamte Einrichtung des Gerätes 100 zum Auswechseln des leeren dritten Vorratsbehälters 92' für die Härter-Komponente B2 gegen einen vollen Vorratsbehälter mit der Härter-Komponente B2 außer Betrieb gesetzt wird.

Der Formkörper 235 des Auffangbehälters 230 weist auf seiner den Rohrstutzen 231, 232, 232' gegenüberliegenden Wandfläche 235c einen Rohrstutzen 234 auf, in den zur Halterung und Zentrierung des Auffangbehälters 230 die Handhabe bzw. Klemmeinrichtung 103 des Gerätes 100 die Antriebswelle der Antriebsvorrichtung 250 für die Mischvorrichtung 1 eingreifend ist.

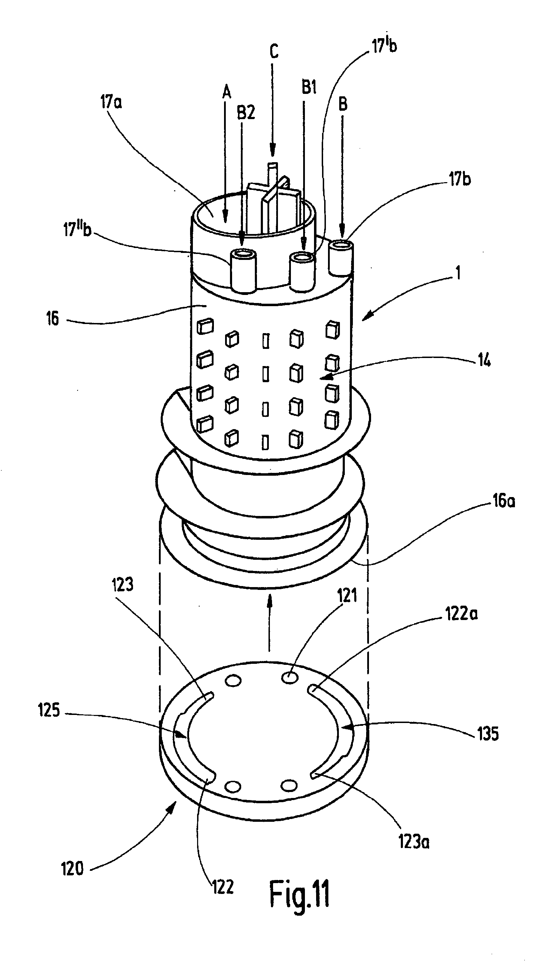

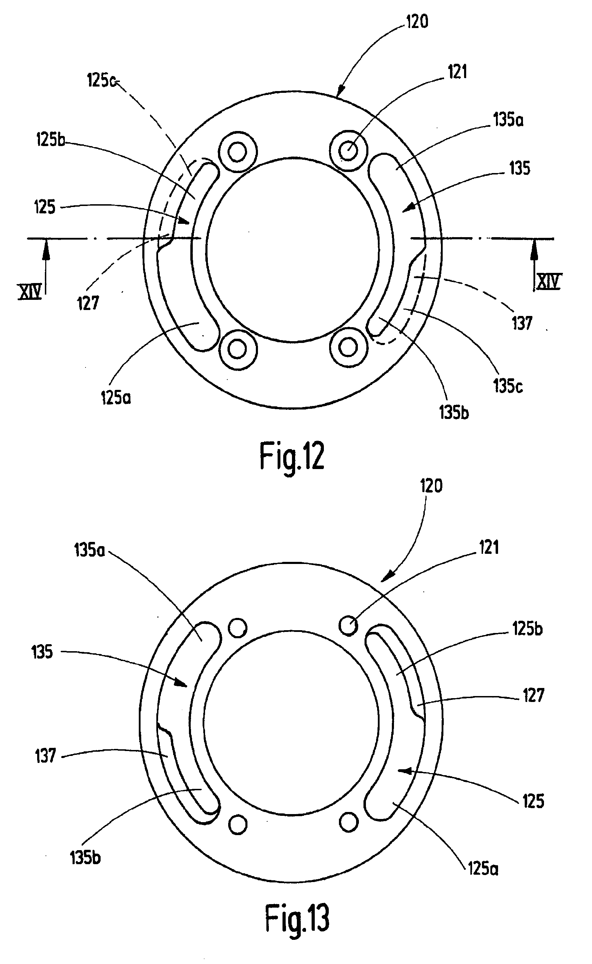

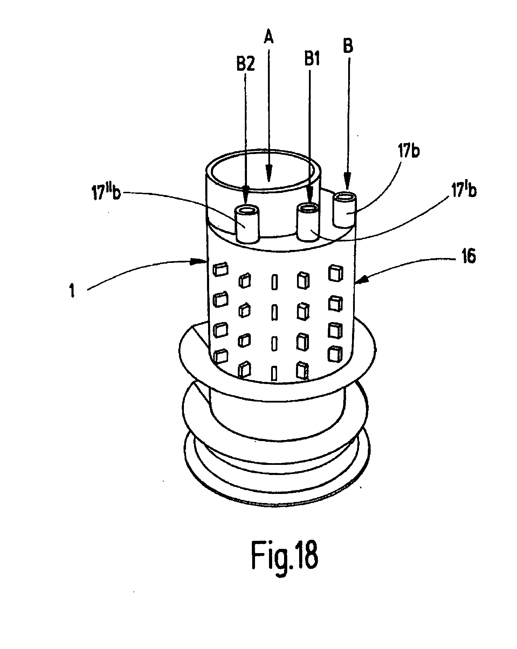

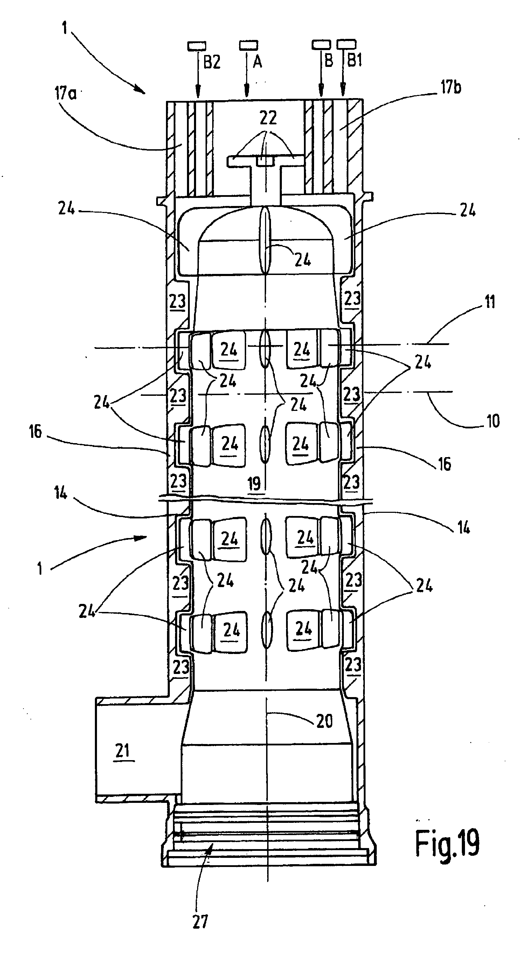

Die in Fig. 11 bis 24 dargestellte Mischvorrichtung 1 umfasst einen Statorteil 16 und einen Rotorteil 19. Der Rotorteil 19 ist in den Statorteil 16 eingesetzt und drehbar in diesem gelagert. Bei C greift der Antrieb für den Rotorteil 19 an (Fig. 11 und 17). Zur Zuführung des Mischgutes und auch der Härter-Komponente B2 für den Vorlauf und den Nachlauf weist der Statorteil 16 Eintrittsöffnungen bzw. Eintrittsstutzen 17a, 17b, 17'b, 17"b auf, wobei durch die Eintrittsöffnung 17a die Binder-Komponente A und durch die Eintrittsöffnungen 17b, 17'b, 17"b die Härter-Komponenten B, B1, B2 zugeführt werden. Zur Verdeutlichung der Zufuhr der Komponenten sind jeweilige Pfeile mit A, B, B1, B2 gekennzeichnet. Der Rotorteil 19 ist um eine Längsachse 20 drehbar gelagert, wobei endseitig am Rotorteil 19 Vorsprünge 22 vorgesehen sind, welche mit dem Rotorteil 19 mitrotieren und sich in die Eintrittsöffnung 17a hinein erstrecken. Damit wird eine Erhöhung der Fließfähigkeit der thixotropen Binder-Komponente A bewirkt, wobei die Vorsprünge 22 mehrfach am Rotorteil 19 endseitig angebracht sind.

Die Befestigung und Halterung der Mischvorrichtung 1 an der Halterung 103 des Standfußes 101 des Gerätes 100 erfolgt gemäß Fig. 11, 12, 13, 14, 15 und 16 mittels einer ringförmigen Halterung 120. Hierzu trägt der Statorteil 16 an seinem den Eintrittsöffnungen 17a, 17b, 17'b abgekehrten Ende 16a die ringförmige Halterung 120, die Befestigungsdurchbrechungen 121 aufweist und die bajonettverschlussartig lösbar und drehbar mit dem Statorteil 16 verbunden ist, wobei die Drehbarkeit der Mischvorrichtung vermittels Anschlägen 122, 123; 122a, 123a derart begrenzt ist, dass eine Passung der Eintrittsöffnung 17a für die Binder-Komponente A mit der Zuführung der Binder-Komponente A und gleichzeitig eine Passung der Eintrittsöffnungen 17b, 17'b, 17"b für die Härter-Komponenten B, B1, B2 mit den Zuführungen für die Härter-Komponenten B, B1, B2 erreicht wird.

Diese ringförmige Halterung 120 weist zwei sich gegenüberliegende bogenförmig verlaufende, schlitzförmige Durchbrechungen 125, 135 auf, von denen jede Durchbrechung 125, 135 zwei Führungsabschnitte 125a, 125b, 135a, 135b mit unterschiedlichen Breiten aufweist, von denen der jeweils breitere Führungsabschnitt 125a, 135a zum Einführen eines von zwei am unteren umlaufenden Rand 16a des Statorteils 16 angeformten L-förmigen Führungsnocken 140, 140' ausgebildet ist, wobei die Breite des breiteren Führungsabschnittes 125a; 135a der Länge des freien abgewinkelten Schenkels 140a, 140'a des Führungsnockens 125, 135 entspricht und von denen der jeweils schmälere Führungsabschnitt 125b, 135b eine Breite aufweist, die der Stärke des an dem unteren umlaufenden Rand 16a des Statorteils 16 angeformten und parallel zur Längsrichtung der Mischvorrichtung 1 verlaufenden Schenkels 140b, 140'b des L-förmigen Führungsnockens 140, 140' entspricht.

Der jeweils außenliegende Wandbereich 125c, 135c des schmäleren Führungsabschnittes 125b, 135b weist unter Ausbildung zungenartiger Randbereiche 127, 137 stegartige Wandabschnitte 125d, 135d auf, so dass nutenartige Ausnehmungen gebildet werden, deren Tiefe in etwa der Stärke des abgewinkelten Schenkels 140a, 140'a des L-förmigen Führungsnockens 140, 140' entspricht (Fig. 11).

Die ringförmige Halterung 120 besteht aus einem Kunststoff oder einem anderen geeignetem Material, z. B. einem Metall.

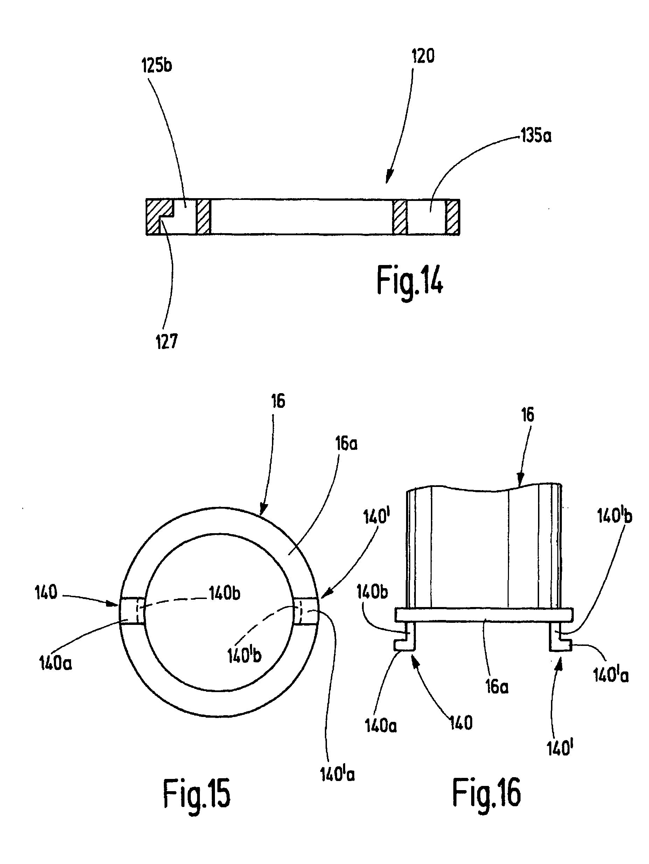

Die ringförmige Halterung 120 wird wie folgt eingesetzt: An der Halterung 103 des Standfußes 101 des Gerätes 100 wird die ringförmige Halterung 120 derart befestigt, dass die schlitzartigen Durchbrechungen 125, 135 mit ihren breiteren Führungsabschnitten 125a, 135a und mit ihren schmäleren Führungsabschnitten 125b, 135b der Mischvorrichtung 1 zugekehrt sind (Fig. 11). Nach der Befestigung der ringförmigen Halterung 120 wird die Mischvorrichtung 1 in der Weise auf die Halterung 120 aufgesetzt, dass die L-förmigen Führungsnocken 140, 140' der Mischvorrichtung 1 durch die breiteren Führungsabschnitte 125a, 135a der schlitzförmigen Durchbrechungen 125, 135 hindurchgeführt werden (Fig. 16). Daraufhin wird die Mischvorrichtung 1 um ihre Längsachse verdreht, bis die freien Schenkel 140a, 140' der L-förmigen Führungsnocken 140, 140' an den Enden der schmäleren Führungsabschnitte 125b, 135b der schlitzförmigen Durchbrechungen 125, 135 anschlagen. Dabei Untergreifen die freien Schenkel 140a, 140'a des L-förmigen Führungsnockens 140, 140' die zungenartigen Randbereiche 127, 137 der schmäleren Führungsabschnitte 125b, 135b, die benachbart zum umlaufenden Rand der ringförmigen Halterung 120 verlaufen (Fig. 2). Die Mischvorrichtung 1 ist somit bajonettverschlussartig an der ringförmigen Halterung 120 und somit an der Halterung 103 des Standfußes 101 des Gerätes 100 gehalten. Bei einem Verdrehen der Mischvorrichtung 1 im entgegengesetztem Sinn wird der Bajonettverschluss entriegelt und die Mischvorrichtung 1 kann dem Gerät 100 entnommen werden, um eine gebrauchte Mischvorrichtung 1 gegen eine neue Mischvorrichtung austauschen zu können. Durch diese Art der Halterung der Mischvorrichtung 1 an dem Gerät 100 wird erreicht, dass nach dem Einsetzen der Mischvorrichtung 1 in die ringförmige Halterung 120, dass die Drehbarkeit der Mischvorrichtung 1 vermittels der Anschläge 122, 123, 122a, 123a an den Enden der schlitzartigen Durchbrechungen 125, 135 der ringförmigen Halterung 120, 130 derart begrenzt wird, dass eine Passung der Eintrittsöffnung 17a für die Binder-Komponente A mit der Zuführung für die Binder-Komponente A und gleichzeitig eine Passung der Eintrittsöffnungen 17b, 17'b, 17"b für die Härter-Komponente B, B1, B2 mit den Zuführungen für die Härter-Komponenten B, B1, B2 erreicht wird (Fig. 11).

Durch die Vorsprünge 22 am Ende des Rotorteils 19 wird Bewegungsenergie in die Binder-Komponente A eingebracht, um deren Thixotropie reversibel zu zerstören, die Binder-Komponente A kann sich dadurch beim Eintritt in eine nachfolgend angeordnete Mischkammer 14 gleichmäßiger mit den beiden Härter-Komponenten B und B1 vermischen. Die Mischkammer 14 ist zwischen dem Rotorteil 19 sowie dem Statorteil 16 ringspaltartig ausgebildet. Die zu vermischenden Komponenten A, B und B1 werden derart in die Mischvorrichtung 1 zugeführt, dass sie sich erst im inneren der Mischkammer 14 miteinander verbinden, nachdem bereits durch den Vorlauf mit anschließendem Nachlauf Härter-Komponente B2 der Mischkammer 14 zugeführt worden ist. Dadurch bleiben nach dem Beenden des Mischvorganges und dem Trennen der Mischvorrichtung 1 von einer entsprechenden Basisstation alle Mischgutreste in der Mischvorrichtung 1. Diese ist als Einwegteil ausgestaltet, welches nach Gebrauch entsorgt und durch ein entsprechendes Neuteil ersetzt wird. Über die Eintrittsöffnungen 17b, 17'b, 17"b werden die Härter-Komponenten B, B1, B2 der Mischkammer 14 zugeführt, in der die Härter-Komponenten mit der Binder-Komponente A vermischt werden. Dabei erfolgt die Zuführung der Komponenten A, B und B1 in folgender Reihenfolge: Zuerst wird vor dem Beginn des eigentlichen Mischvorganges etwa eine Sekunde lang als Vorlauf, Härter-Komponente B2 aus dem Vorratsbehälter 92' der Mischvorrichtung 1 zugeführt, in der sich noch keine Binder-Komponente A und keine weiteren Härter-Komponenten befinden. Nach Drehbeginn des Rotorteils 19 erfolgt noch eine Sekunde lang ein Nachlauf der Härter-Komponente B2, während gleichzeitig die erforderlichen Mengen an Binder-Komponente A und Härter-Komponenten B und B1 aus den Vorratsbehältern 90, 91,92 zugeführt werden. Die Zuführung der Härter-Komponente B2 erfolgt nur für den Vorlauf und den Nachlauf.

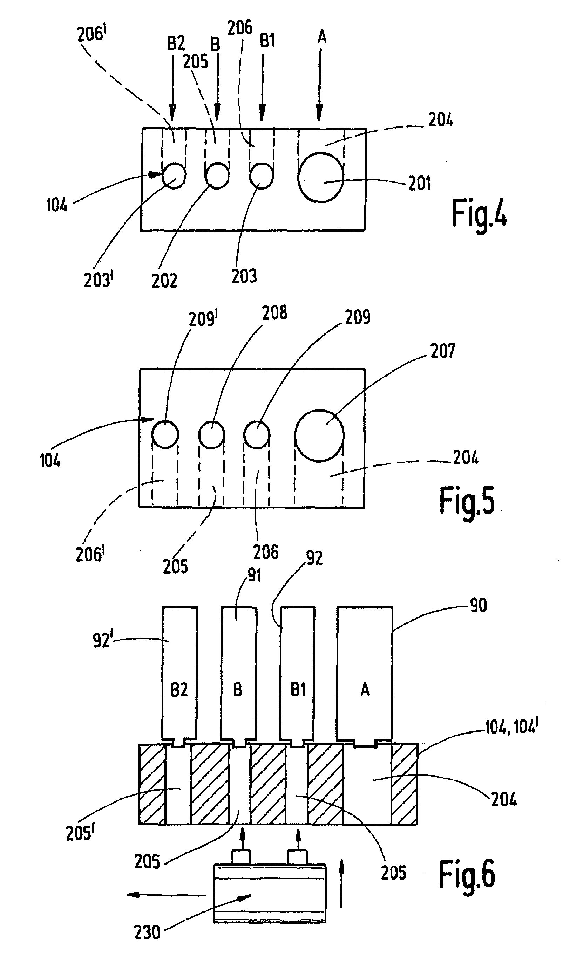

Es wird dann eine geringe Menge an Härter-Komponente B der Mischkammer 14 zugeführt. Gleichzeitig werden die Binder-Komponente A und die Härter-Komponente B1 zugeführt, so dass die in die Mischkammer gelangende Binder-Komponente A auf die sich bereits in der Mischkammer befindliche Härter-Komponente B bzw. B2 trifft und sich bereits mit dieser vermischt. Diese Vorgehensweise hat zur Folge, dass in die Mischkammer einfließende Binder-Komponente A auf die bereits vorhandene Härter-Komponente B bzw. B2 trifft und mit dieser vermischt wird, so dass kein Anteil an Binder-Komponente austreten kann, der keine Härter-Komponente aufweist. Besonders vorteilhaft ist dabei, dass sich bereits Härter-Komponente B2 aus dem Vorratsbehälter 92' in der Mischkammer 14 durch den vorgesehenen Vorlauf befindet, so dass eingeführte Binder-Komponente A beim Einfließen in die Mischkammer 14 auf die Härter-Komponente B2 trifft. Es tritt somit immer mit der Härter-Komponente vermischte Binder-Komponente aus der Mischkammer aus, so dass auch das zuerst austretende Gemisch Härter-Komponente enthält und sofort verarbeitet werden kann. Danach wird Härter-Komponente der Mischkammer 14 zugeführt, bevor die Binder-Komponente in die Mischkammer einfließt. Dieser Vorlauf an Härter-Komponente wird steuerungstechnisch erreicht, indem eine entsprechende Steuerung der Dosiereinrichtungen 90, 91, 92, 92' für die Härter-Komponenten und für die Binder-Komponente erfolgt (Fig. 6). Des Weiteren kann der Statorteil 16 der Mischvorrichtung 1 auch nur eine Zuführung für die Härter-Komponente aufweisen. In diesem Fall erfolgt über die Steuerung zuerst eine Zufuhr einer kleinen Menge an Härter-Komponente B2 als Vorlauf und Nachlauf, danach erfolgt die Zufuhr einer kleinen Menge an Härter-Komponenten in die Mischkammer 14, woraufhin dann die Zuführung der Binder-Komponente und zwar zusammen mit weiteren Härter-Komponenten erfolgt. Dem Vorratsbehälter 92' wird nur Härter-Komponente für den Vorlauf und den Nachlauf entnommen, so dass vor der Zuführung der Binder-Komponente bereits eine sehr kleine Menge an Härter-Komponente in der Mischkammer 14 vorliegt, so dass Binder-Komponente beim Einlauf in die Mischkammer 14 bereits mit durch den Vorlauf eingebrachte Härter-Komponente auf diese auftrifft und um einen gleitenden Übergang zu schaffen, erfolgt noch die Zuführung einer geringen Menge an Härter-Komponente, woraufhin dann die weitere Zuführung von Härter-Komponente und Binder-Komponente erfolgt. Es besteht auch die Möglichkeit, anstelle Härter-Komponenten aus zwei Vorratsbehältern zu entnehmen, für den Vorlauf und den Nachlauf Härter-Komponente nur aus einem der beiden Vorratsbehälter für die Härter-Komponente zu entnehmen. Vorteilhafter ist es jedoch, wenn zwei Vorratsbehälter für die Härter-Komponente und einen gesonderten Vorratsbehälter mit Härter-Komponente für den Vorlauf und den Nachlauf zur Verfügung gestellt wird.

Mit Hilfe von bevorzugterweise vorgeschalteten Dosiereinrichtungen werden die zu vermischenden Komponenten kontinuierlich durch die Mischkammer 14 hindurch zu einer am Statorteil 16 angeordneten Abgabeöffnung 21 gefördert, die in Durchflussrichtung hinter den Eintrittsöffnungen 17a, 17b und 17'b und nach der Mischkammer 14 angeordnet ist. Am Statorteil 16 sind mehrere erste Mischzähne 23 angeordnet, welche sich radial nach innen in die Mischkammer 14 erstrecken, wohingegen am Rotorteil 19 zweite Mischzähne 24 angeordnet sind, welche sich radial nach außen in die Mischkammer 14 hineinerstrecken.

Vermittels einer Rotationsbewegung des Rotorteils 19 im Statorteil 16 werden somit die Mischzähne 23, 24 gegeneinander bewegt, so dass eine Vermischung der beiden Komponenten A, B und B1 bewirkt wird. Wenn bereits ein Vorlauf der Härter-Komponente erfolgt ist und ein Teil der nachfolgenden Binder-Komponente A mit der Härter-Komponente B sich vermischt hat und die beiden anderen Komponenten A und B der Mischkammer zugeführt werden. Es werden dann in der Mischkammer 14 zugeführte Binder-Komponente A und Härter-Komponente B, B1 miteinander vermischt. Diese beiden Komponenten A und B, B1 werden in einem vorgegebenen Verhältnis solange der Mischkammer zugeführt, bis die jeweils gewünschte Menge an Mischgut erhalten wird. Die ersten Mischzähne 23 sind auf einer ersten Mischzahnebene 10 und die zweiten Mischzähne 24 auf einer zweiten Mischzahnebene 11 angeordnet. Insgesamt sind fünf erste Mischzahnebenen 10 und vier zweite Mischzahnebenen 11 vorgesehen, welche ineinander verschachtelt wechselweise in axialer Richtung entlang der Längsachse 20 angeordnet sind. Die zweiten Mischzähne 24 laufen durch die Rotationsbewegung des Rotorteils 19 in den Zwischenräumen der ersten Mischzähne 23 radial um, welche ruhend am Statorteil 16 angeformt sind. Dadurch entsteht zwischen den Mischzähnen 23 und 24 eine Scher- bzw. Teilungsbewegung, so dass das Mischgut eine optimale Durchmischung erfährt.

Eine Vorvermischung der beiden Komponenten A, B und/oder B1 erfolgt durch größere zweite Mischzähne 24, welche am vorderen Ende des Rotorteils 19 angeordnet sind, so dass diese Komponenten durch diese Mischzahnebene vorvermischt werden. Die größeren ausgebildeten endseitig angeordneten zweiten Mischzähne 24 sind vierfach auf dem Umfang des Rotorteils 19 angeordnet und gehen jeweils in die ebenfalls vierfach vorhandenen Vorsprünge 22 über. Am offenen Ende weist der Statorteil 16 eine Aufnahmeöffnung auf, in welchem ein zylindrischer Lagerabschnitt 27, welcher am Rotorteil 19 angeformt ist, eine Lagerung des Rotorteils 19 im Statorteil 16 bewirkt. So ist eine radiale Lagerung des Rotorteils 19 im Statorteil 16 geschaffen. Die Durchmesserpassung des zylindrischen Lagerabschnittes 27 am Rotorteil 19 ist im Durchmesser so bemessen, dass eine entsprechende Gleitlageranordnung entsteht.

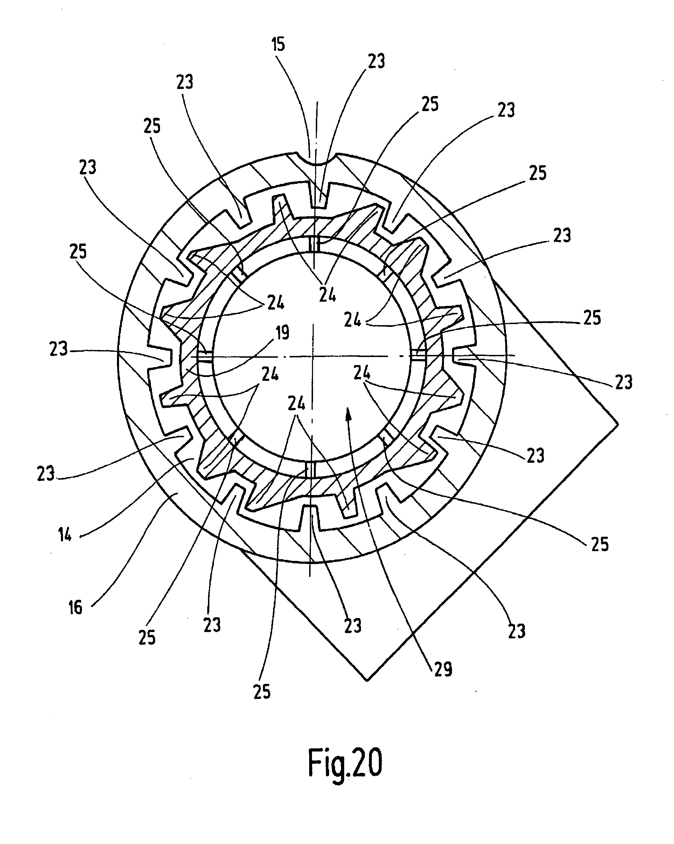

Fig. 20 zeigt einen Querschnitt der Mischvorrichtung 1, wobei sowohl der Statorteil 16 als auch der Rotorteil 19 im Querschnitt dargestellt sind. Hierin ist insbesondere die Anordnung der Mischzähne 23 und 24 illustriert, wobei die zweiten Mischzähne 24 am Rotorteil 19 derart ausgeformt sind, . dass in Bezug auf eine spritzgusstechnische Herstellung des Rotorteils 19 lediglich eine einzige Teilungsebene zur Anwendung eines einhubigen Spritzgusswerkzeuges hinreichend ist. Weiterhin ist erkennbar, dass die Mischzähne 23, 24 jeweils materialeinheitlich an dem Statorteil 16 sowie am Rotorteil 19 angeformt sind, so dass die Mischvorrichtung 1 lediglich aus diesen beiden Komponenten besteht. Der Rotorteil 19 weist einen inneren Bereich auf, welcher als Ausnehmung 29 hohl ausgebildet ist. In die Ausnehmung 29 verlaufen Rastrippen 25 radial nach innen, wobei auf dem Umfang insgesamt acht Rastrippen 25 angeordnet sind. Der Statorteil 16 umfasst eine halbmondförmige Rastkontur 15, welche am Außenumfang vorgesehen ist.

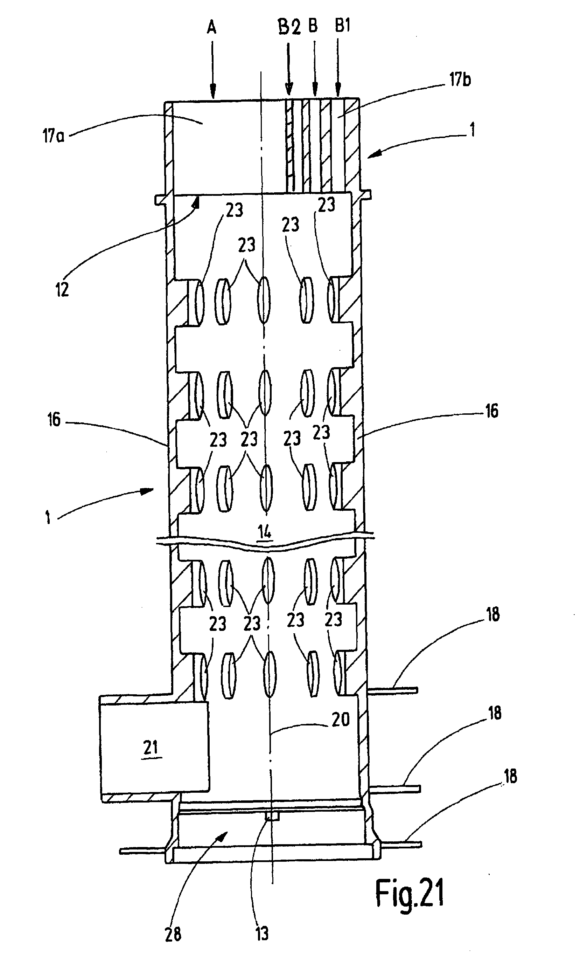

Fig. 21 illustriert einen Querschnitt des Statorteils 16, welcher entlang der Längsachse 20 geschnitten dargestellt ist. Damit sind die Anordnungen der Eintrittsöffnungen 17a, 17b, 17'b im Schnitt dargestellt, welche direkt in die Mischkammer 14 münden. Innenliegend sind in der Wandung des Statorteils 16 die ersten Mischzähne 23 auf den insgesamt fünf Ebenen angeordnet, wobei insgesamt zwölf erste Mischzähne 23 über den Umfang auf jeweils einer Mischzahnebene verteilt vorgesehen sind. Am gegenüberliegend den Eintrittsöffnungen 17a, 17b und 17'b gelegenen Ende der Mischkammer 14 ist eine Abgabeöffnung 21 vorgesehen, welche das Mischgut radial nach außen aus der Mischkammer 14 herausführt (Fig. 5). Am Außenumfang des Statorteils 16 sind tellerförmige Anformungen 18 ausgebildet, wobei insgesamt drei tellerförmige Anformungen 18 auf der Höhe der Abgabeöffnung 21 sowie endseitig am Statorteil 16 vorgesehen sind. Die Eintrittsöffnung 17a bzw. 17b geht auf der Höhe einer Stützlagerfläche 12 in die Mischkammer 14 über, wobei die Stützlagerfläche 12 eine axiale Lagerung des - hier nicht dargestellten - Rotorteils 19 bildet. Der Statorteil 16 ist am hinteren Ende, welches sich gegenüberliegend zu den Eintrittsöffnungen 17a, 17b, 17'b, 17"b befindet, endseitig geöffnet, so dass der Rotorteil 19 durch diese Öffnung in den Statorteil 16 gefügt werden kann. Im Bereich der Öffnung weist der Statorteil 16 einen als Abschnitt ausgeführten Hohlraum 28 auf, um das Mischgut, welches sich in diesem Bereich hineinbewegt, aufzunehmen. Um das Mischgut gegebenenfalls austreten zu lassen, sind Austrittsöffnungen 13 in der. Wandung eingebracht, welche insgesamt zweifach auf dem Umfang angeordnet sind.

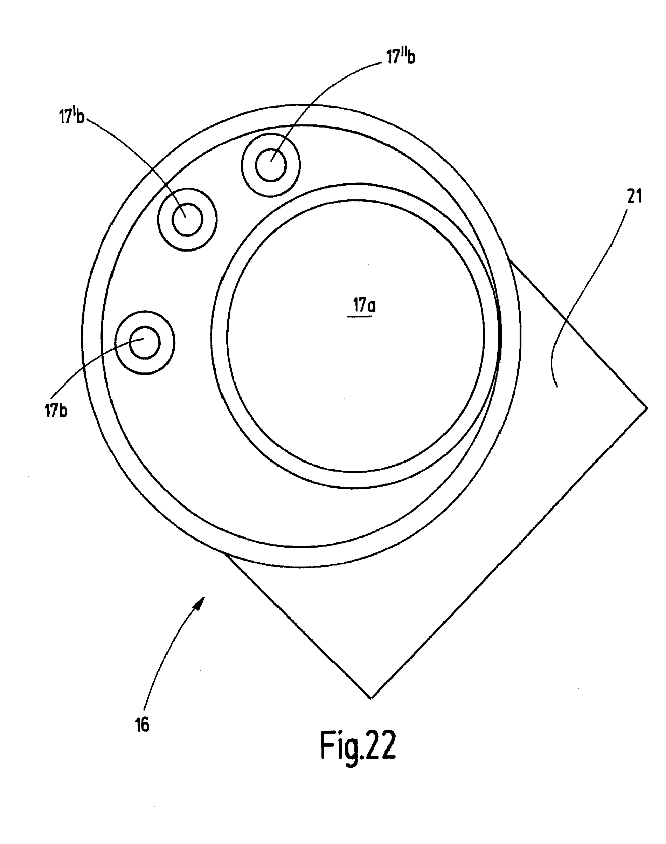

In Fig. 22 ist eine Draufsicht auf den Statorteil 16 gezeigt, welche insbesondere die Anordnung der Eintrittsöffnungen 17a, 17b, 17'b zeigt. Die Eintrittsöffnung 17a ist exzentrisch ausgebildet und weist einen kreisförmigen Querschnitt auf. Neben der Eintrittsöffnung 17a sind zwei Eintrittsöffnungen 17b, 17'b vorgesehen, um eine redundante Zufuhr der Härter-Komponente in die Mischkammer 14 zu ermöglichen. Dabei sind die Eintrittsöffnungen 17b, 17'b, 17"b zueinander beabstandet ausgebildet und werden über ebenfalls voneinander getrennte Zufuhrleitungen und Dosiereinrichtungen 91, 92 gespeist. Weiterhin ist die Anordnung der Abgabeöffnung 21 dargestellt, welche das Mischgut seitlich aus dem Statorteil 16 hinaus befördert.

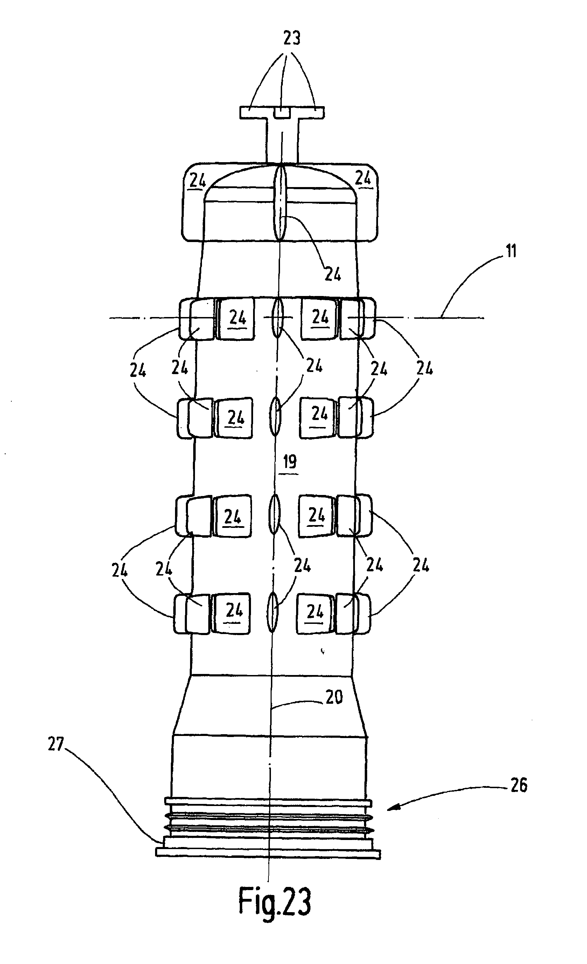

In Fig. 23 ist der Rotorteil 19 dargestellt, wobei insbesondere die zweiten Mischzähne 24 hinsichtlich ihrer Verteilung auf dem Umfang des Rotorteils 19 dargestellt sind. Insgesamt sind zwölf Mischzähne auf einer Mischzahnebene 11 vorgesehen, so dass bei insgesamt vier Mischzahnebenen 11 insgesamt 48 Mischzähne am Rotorteil 19 angeordnet sind. Zuzüglich befinden sich am oberen Teil des Rotorteils 19 vier weitere Mischzähne 24 zur Vorhermischung des Mischgutes. Diese gehen in die Vorsprünge 22 über, welche ebenfalls vierfach an einer Art Verlängerung des Rotorteils 19 angeordnet sind.

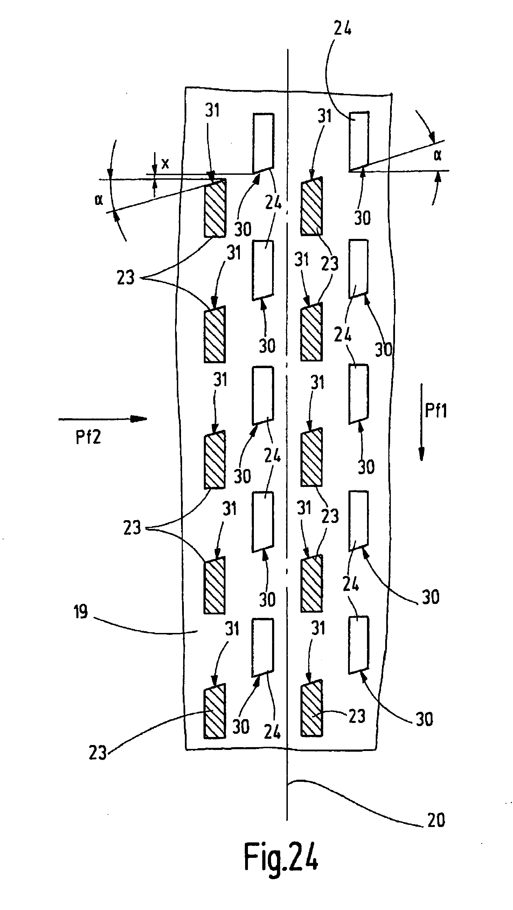

Fig. 24 illustriert einen Teilquerschnitt durch die Mischvorrichtung 1 entlang der ringförmigen umlaufenden Mischzone, wobei die Mischzähne 23 des Statorteils 16 schraffiert und die Mischzähne 24 des Rotorteils 19 unschraffiert dargestellt sind. Die Mischzähne 23 und 24 der einzelnen Mischzahnebenen sind derart zueinander beabstandet angeordnet, dass die Zähne zueinander Zahnlücken aufweisen. Zwischen den einzelnen Mischzahnebenen weisen die Mischzähne 23, 24 Zwischenräume auf, durch die bei der Rotationsbewegung die am betreffenden Zwischenraum gegenüberliegenden Mischzähne der jeweils anderen Seite hindurch laufen. Durch eine kontinuierliche Zuführung der Komponenten A, B in die Mischkammer 14 kommt es zu einer Teilung des Mischgutstromes, d. h. der Mischgutstrom fließt jeweils an der einen Seite des betreffenden Zahnes 23, 24 und der andere Teil an der anderen Seite des betreffenden Zahnes 23, 24 vorbei. Da diese Teilung in mehreren, der Anzahl der Etagen bzw. Mischzahnebenen entsprechenden Stufen stattfindet, wird das Mischgut intensiv vermischt.

Die Mischzähne 23 weisen Stirnseitenflächen 31 auf, welche den Stirnseitenflächen 30, die an den zweiten Mischzähnen 24 angeformt sind, gegenüberstehen. Bei einer Berührung der Mischzähne 23 und 24 kann somit ein Abgleiten erfolgen, ohne dass Material an den Mischzähnen abgetragen wird. Dies kann insbesondere dann erfolgen, wenn der Rotorteil 19 gegenüber dem Statorteil 16 um einen Betrag x versetzt wird, so dass die Mischzähne 23, 24 aufeinander treffen. Die Stimseitenflächen 30, 31 sind unter einem Winkel α angeschrägt, wobei der Winkel α vorzugsweise 15° beträgt.

Für den Betrieb des Gerätes 100 wird verfahrenstechnisch so vorgegangen, dass die Kolbenstangen 110, 111, 112, 112' mit den Kolbenplatten 240, 241, 242, 242' von Hand in die geöffneten Vorratsbehälter 90, 91, 92 eingesetzt werden und sobald die Kolbenplatten unterhalb der Öffnungsränder der Vorratsbehälter 90, 91, 92, 92' zu liegen kommen, wird der die Antriebsvorrichtung 270 für die Hydraulik zum Betätigen der Kolbenstange 245' für den Vorratsbehälter 92' für die Härter-Komponente B2 in Betrieb gesetzt, damit der Vorlauf für die Härter-Komponente B2 eingeleitet werden kann. lst der Vorlauf der Härter-Komponente B2 eingeleitet, dann wird der Motor 102 für die Hydrauliken zum Betätigen der Kolbenstangen 110, 111, 112 für die Vorratsbehälter 90, 91, 91 für die Binder-Komponente A und die Härter-Komponente B, B1 in Betrieb gesetzt, wobei gleichzeitig der Nachlauf für die Härter-Komponente eingeleitet wird; erst dann werden die einzelnen Mischprozesse durchgeführt. Durch diese Maßnahme werden Verletzungen verhindert, die dadurch eintreten, dass Finger der Hand einer Bedienungsperson im Bereich des Öffnungsrandes, insbesondere des Vorratsbehälters 90 für die Binder-Komponente A, zu liegen kommen und durch die mit relativ hohem Druck in Behälterrichtung bewegte Kolbenplatte eingeklemmt werden.

Die Mischvorrichtung 1 wird mit ihren rohrstutzenartigen Einführungsöffnungen 17a, 17b, 17'b, 17"b in die Austrittsöffnungen 201, 202, 203, 203' des Abfüllkopfes 104 eingesetzt, wenn das Gerät 1 in Betrieb genommen wird (Fig. 1E und 11). Hier wird die Halterung 103 geöffnet, die Mischvorrichtung 1 mit ihren Einführöffnungen 17a, 17b, 17'b, 17"b in die Austrittsöffnungen 201, 202, 203, 203' des Abfüllkopfes 104 gesteckt und die Halterung 103 geschlossen, wobei gleichzeitig eine Verbindung des Rotorteils 19 mit dem an der Halterung 103 vorgesehenen Antriebsmotor 250 hergestellt wird (Fig. 1 E).

Um das Auswechseln der Vorratsbehälter zu erleichtern und um eine Egalisierung der Füllhöhen in den Vorratsbehältern zu erreichen, da diese zwischen der Binder-Komponente A und den Härter-Komponenten B, B1 unterschiedlich sind, ist zur Beseitigung der Überfüllung der Vorratsbehälter 91, 92 für die Härter-Komponente B, B1 der Auffangbehälter 230 vorgesehen, der zu Beginn einer Abzapfung der Komponenten A, B, B1 aus ihren Vorratsbehältern 90, 91, 92 anstelle der Mischvorrichtung 1 in das Gerät 100 eingesetzt wird.

Der Formkörper 235 des Auffangbehälters 230 besteht aus einem Kunststoff oder einem geeigneten Material.

### Die Handhabung des Auffangbehälters 230 ist wie folgt:

Nach dem Einsetzen eines neuen Vorratsbehälters 90 für die Binder-Komponente A und der neuen Vorratsbehälter 91, 92 für die Härter-Komponenten B, B1 in das Gerät 100 (Fig. 6) wird in die Halterung 103 der Auffangbehälter 230 eingesetzt (Fig. 1 E), wobei seine Rohrstutzen 231, 232 in die Austrittsöffnungen 202, 203 der Zuführungskanäle 205, 206 des Abfüllkopfes 104 eingesteckt werden, über die die Binder-Komponenten B, B1 zugeführt werden (Fig. 3 und 6). Nach dem Einsetzen des Auffangbehälters 230 in den Abfüllkopf 104 wird ein mit den Kolbenstangen 110, 111, 112 der Vorratsbehälter 90, 91, 92 für die Binder-Komponente A und die Härter-Komponente B, B1 verbundener Handgriff 260 in Pfeilrichtung X d.h. in Richtung zum Standfuß 101 des Gerätes 100 mit aller Kraft gezogen (Fig. 1), so dass die Kolbenstangen 110, 111, 112 in Pfeilrichtung x1, x2, x3 bewegt werden (Fig. 7), bis die plattenförmigen Kolben 240, 241, 242 die Oberflächen 0B, 0B1, 0B2 der Komponenten A, B, B1 der Vorratsbehälter 90, 91, 92 beaufschlagen. Der Zug an dem Handgriff 260 wird dann erhöht mit der Folge, dass die Inhalte der Vorratsbehälter 91, 92 für die Härter-Komponenten B, B1 in Pfeilrichtung x4, x5 soweit gedrückt werden, bis die Überfüllung in den beiden Vorratsbehältem 91, 92 für die Härter-Komponenten B, B1 aus den Vorratsbehältern 91, 92 herausgedrückt und in den Auffangbehälter 230 gedrückt sind (Fig. 8). Damit ist eine Egalisierung der Füllhöhen in den drei Vorratsbehältern 90, 91, 92 erreicht, d.h. die Füllhöhen in den Vorratsbehältern 91, 92 haben dann die Füllhöhe im Vorratsbehälter 90 erreicht, denn aufgrund der höheren Viskosität der Binder-Komponente A gegenüber der Viskosität der Härter-Komponente B, B1 wird die Binder-Komponente A während des Herausdrückens der die Überprüfung und ausmachenden Menge an Härter-Komponente B, B1 aus ihren Vorratsbehältern 91, 92 nicht aus ihrem Vorratsbehälter 90 gedrückt.

Sind die Füllhöhen in allen drei Vorratsbehältern 90, 91, 92 egalisiert (Fig. 8). Dann wird der mit der die Überfüllung ausmachenden Menge an Härter-Komponente B, B1 gefüllte Auffangbehälter 230 vom Abfüllkopf 104 abgezogen und entsorgt (Fig. 8). Nach dem Abziehen des Auffangbehälters 230 von dem Abfüllkopf 104 wird auf diesen die Mischvorrichtung 1 gesteckt, in dem die rohrstutzenartigen Eintrittsöffnungen 17a, 17b, 17'b der Mischvorrichtung 1 in die Austrittsöffnungen 201, 202, 203 der Zuführungskanäle 204, 205, 206 in dem Abfüllkopf 104 gesteckt werden (Fig. 7).

Die Anordnung der Austrittsöffnungen 202, 203 für die Härter-Komponente B, B1 in dem Abfüllkopf 104 und die Anordnung der rohrstutzenartigen Eintrittsöffnungen 17b, 17'b der Mischvorrichtung 1 sowie die der Rohrstutzen 231, 232 des Auffangbehälters 230 ist derart, dass sowohl die rohrstutzenartigen Eintrittsöffnungen 17b, 17'b der Mischvorrichtung 1 als auch die Rohrstutzen 231, 231 des Auffangbehälters 230 in die Austrittsöffnungen 202, 203 für die Härter-Komponente B, B1 in dem Abfüllkopf 104 einsteckbar sind. Des Weiteren ist die Anordnung der Austrittsöffnung 201 für die Binder-Komponente A in dem Abfüllkopf 104 derart, dass die rohrstutzenartige Eintrittsöffnung 17a der Mischvorrichtung 1 für die Binder-Komponente A mit der Austrittsöffnung 201 für die Binder-Komponente A in dem Abfüllkopf 104 korrespondieren kann (Fig. 3).

Unter Verwendung des erfindungsgemäßen Gerätes 100 mit einer Mischvorrichtung 1 und einem Auffangbehälter 230 wird eine gebrauchsfertige Spachtelmasse für die Verspachtelung von Oberflächen von beispielsweise Fahrzeugkarosserien durch Vermischen einer Binder-Komponente A mit Härter-Komponenten B, B1, B2 zu einem pastösen oder flüssigen Mischgut in der Weise hergestellt, dass vor dem Beginn der Abzapfung einer gemischten Menge an Binder-Komponente A und Härter-Komponente B, B1 zur Egalisierung der Oberflächenhöhe der Binder-Komponente A in deren Vorratsbehälter 90 und der Härter-Komponenten B, B1 in deren beiden Vorratsbehältern 91, 92 die Füllhöhe der Härter-Komponenten B, B1 in den beiden Vorratsbehältern 91, 92 gegenüber der Füllhöhe der Binder-Komponente A in dem Vorratsbehälter 90 höher eingestellt wird, hierauf durch Handbetätigung die in den Innenräumen 90a, 91 a, 92a angeordneten an ihren freien Enden plattenförmige Kolben 240, 241, 242 tragenden Kolbenstangen 110, 111, 112 in den Vorratsbehältern 90, 91, 92 vermittels Handbetätigung gegen die Behälterinhalte bei gleichzeitiger Beaufschlagung der Binder-Komponente A in den Vorratsbehälter 90 und der Härter-Komponenten B, B1 in den Vorratsbehälter 91, 92 bewegt und die überfüllte Menge an Härter-Komponenten B, B1 aus den Vorratsbehältern 91, 92 in den in das Gerät 1 eingesetzten Auffangbehälter 230 herausdrückt bis gleiche Füllhöhen von Binder-Komponente A und von Härter-Komponenten B, B1 erreicht sind, woraufhin der Auffangbehälter 230 gegen die Mischvorrichtung 1 ausgewechselt wird und anschließend alle Kolbenstangen 110, 111, 112 vermittels motorischer oder hydraulischer Kraft betätigt werden um die für die Herstellung der Mischung erforderliche Mengen an Binder-Komponente A und an Härter-Komponente B, B1 aus den Vorratsbehältern 90, 91, 92 in die Mischvorrichtung 1 zum Vermischen der Komponenten A, B, B1 zu drücken, wobei in den Verfahrensablauf mit eingebaut ist oder eingebaut sein kann, dass vor Beginn des eigentlichen Mischvorganges Härter-Komponente B2 einem zusätzlichen Vorratsbehälter 92' entnommen und als Vorlauf und als Nachlauf der Mischkammer 14 der Mischvorrichtung 1 zugeführt wird.

Das Traggestell des Gerätes weist eine zu öffnende, transparente Schutzabdeckung 200 zur Abdeckung der Vorratsbehälter 90, 91, 92, 92' auf, wobei ein Schutzschalter in Wirkverbindung mit der Schutzabdeckung 200 und dem Gerät 100 vorgesehen ist, der das Gerät abschaltet, wenn die Schutzabdeckung geöffnet ist, die aus einem glasklaren Kunststoff oder einem anderen geeigneten Material besteht und türartig ausgebildet ist (Fig. 1 A).

Des Weiteren sind an dem Traggestell des Gerätes 100 vorderseitig und/oder rückseitig Aufnahmebehälter 300, 301 zur Aufnahme von verbrauchten und neuen Mischvorrichtungen 1 vorgesehen (Fig. 1C und 1D).

Neben der optischen Signaleinrichtung 290 kann an dem Traggestell des Gerätes 100 sichtbar eine weitere mit einer Stromquelle verbundene optische Signaleinrichtung 350, wie eine ein weißes Licht oder farbiges Licht aussende Signallampe 351 und/oder eine akustische Signaleinrichtung 360, wie Signalhorn oder Sirene 361, angeordnet sein, wobei beide Signaleinrichtungen 350, 360 bei einer Inbetriebnahme des Gerätes 100 für einen vorgegebenen Zeitraum, bevorzugterweise für einen Zeitraum von zwei oder drei Minuten, durch Aufleuchten und/oder Signalabgabe aktiviert werden. Auch bei einer Leeranzeige für den Vorratsbehälter 92' für die Härter-Komponente B2 kann die Signaleinrichtung 360 aktiviert werden (Fig. 1).

## Patentansprüche

1. Gerät (100) zur Herstellung einer gebrauchsfertigen Spachtelmasse für die Verspachtelung von Oberflächen, insbesondere von Fahrzeugkarosserien, durch Vermischen von mindestens zwei Komponenten, insbesondere von einer Binder-Komponente (A) und einer Härter-Komponente (B), vermittels einer Mischvorrichtung (1) aus einem hohlzylinderartigen Statorteil (16) und einem in diesem konzentrisch um eine Längsachse drehbar aufgenommenen Rotorteil (19) und einem zwischen dem Rotorteil (19) und dem Statorteil (16) ausgebildeten, die Mischkammer (14) bildenden Ringspalt, zu einem pastösen oder flüssigen Mischgut, wobei die Mischvorrichtung (1) mit mindestens einem Einführungsstutzen (17a) für die Zuführung der Binder-Komponente (A) und mindestens einem Einführungsstutzen (17b, 17'b, 17"b) für die Zufuhr der Härter-Komponente (B) sowie mit einer Abgabeöffnung (21) zur Abgabe des Mischgutes versehen ist, wobei zwischen den Einführungsstutzen (17a, 17b, 17'b, 17"b) und der Abgabeöffnung (21) die Mischkammer (14) ausgebildet ist, innerhalb derer sich die Komponenten (A, B) miteinander vermischen,
**dadurch gekennzeichnet,**
**dass** das Gerät (100) einen Standfuß (101) mit zwei senkrecht stehenden, säulenartigen, im oberen Bereich über eine Querstrebe (108) verbundene Streben (106, 107) umfasst, zwischen denen eine einen Abfüllkopf (104) bildende Tragplatte (104') mit Halterungen und Aufnahmen für einen Vorratsbehälter (90) für die Binder-Komponente (A) und für drei Vorratsbehälter (91, 92, 92') für die Härter-Komponente (B, B1, B2) mit in den Vorratsbehältern (90, 91, 92, 92') geführten und mit Hydraulikzylindern oder anderweitigen motorischen Antriebsvorrichtungen (102, 270) verbundenen Kolbenstangen (243, 244, 245, 245') angeordnet sind, wobei ein Anbring- und Führungselement für die Kolbenstangen oberhalb der Vorratsbehälter (90, 91, 92, 92') und eine erste Antriebsvorrichtung (102) für das Betätigen der Hydraulikzylinder bzw. der Kolbenstangen für den Vorratsbehälter (90) für die Binder-Komponente (A) und für zwei Vorratsbehälter (91, 92) der drei Vorratsbehälter (91, 92, 92') für die Härter-Komponente (B, B1, B2) und eine zweite Antriebsvorrichtung (250) für die Mischvorrichtung (1) sowie eine dritte Antriebsvorrichtung (270) für das Betätigen des Hydraulikzylinders bzw. der bevorzugterweise als Zahnstange ausgebildete Kolbenstange (112) für den dritten Vorratsbehälter (92') für die Härter-Komponente (B2) vorgesehen sind, wobei die motorischen Antriebsvorrichtungen (102, 250, 270) in einem Programmschaltwerk bzw. einer Steuervorrichtung (280) derart zusammengeführt sind, dass vor Beginn des Mischprozesses und der Betätigung der Hydraulikzylinder bzw. der Kolbenstangen für den Vorratsbehälter (90) für die Binder-Komponente (A) und für die beiden Vorratsbehälter (91, 92) für die Härter-Komponenten (B, B1), die dritte Antriebsvorrichtung (270) für den dritten Vorratsbehälter (92') für die Härter-Komponente (B2) unabhängig von allen anderen Funktionen in Betrieb gesetzt wird, so dass vor Beginn des eigentlichen Mischprozesses ein Vorlauf an Härter-Komponente (B2) etwa 1 Sekunden lang erfolgt, wobei nach Beginn der Drehbewegung des Rotorteils (19) der Mischvorrichtung (1) und der Zuführung der Binder-Komponente (A) und der Härter-Komponenten (B, B1) die dritte Antriebsvorrichtung (270) für den dritten Vorratsbehälter (92') für die Härter-Komponente (B2) mit einem Nachlauf von 1 Sekunde für eine weitere Zufuhr an Härter-Komponente (B2) betrieben wird, wobei bei vollständiger Entleerung des dritten Vorratsbehälters (92') für die Härter-Komponente (B2) und eine von der in einem kastenartigen Behälter (285) auf der Querstrebe (108) der beiden Streben (106, 107) des Standfußes (101) angeordneten dritten Antriebsvorrichtung (270) angetriebene Zahnstange als Kolbenstange (245') den unteren Bereich des dritten Vorratsbehälters (92') für die Härter-Komponente (B2) erreicht hat, bei einer weiteren Abwärtsbewegung den kastenartigen Behälter (285), der einseitig vermittels eines Scharniers an der Längsstrebe (106) befestigt ist, derart anhebt, dass der kastenartige Behälter (285) etwa 2 mm angehoben wird, wobei über diese Bewegung des kastenartigen Behälters (285) eine optische Signaleinrichtung (290) in Betrieb und die gesamte Einrichtung bzw. Gerät zum Auswechseln des leeren dritten Vorratsbehälters (92') für die Härter-Komponente (B2) gegen einen vollen Vorratsbehälter außer Betrieb gesetzt wird.

2. Gerät nach Anspruch 1,
**dadurch gekennzeichnet,**
**dass** der Standfuß (101) des Gerätes (100) einen als Tragplatte ausgebildeten Abfüllkopf (104) zur Aufnahme des Vorratsbehälters (90) für die Binder-Komponente (A) und der drei Vorratsbehälter (91, 92, 92') für die Härter-Komponente (B, B1, B2) aufweist, wobei die vier Vorratsbehälter (90, 91, 92, 92') rutschfest und ortsfest auf dem Abfüllkopf (104) positioniert sind und mit ihren Austrittsöffnungen mit Eintrittsöffnungen (207, 208, 209, 209') von Zuführungskanälen (204, 205, 206, 206') in dem Abfüllkopf (104) korrespondieren, deren Austrittsöffnungen (201, 202, 203, 203') mit den Einführungsstutzen (17a, 17b, 17'b, 17"b) für die Binder-Komponente (A) und die Härter-Komponente (B, B1, B2) der Mischvorrichtung (1) oder den Einführstutzen (231, 232, 232') für die Härter-Komponente (B, B1, B2) eines gegen die Mischvorrichtung (1) austauschbaren Auffangbehälters (230) zur Aufnahme und Entsorgung der durch Überfüllung vorgegebenen Menge an Härter-Komponenten (B, B1, B2) in den Vorratsbehältern (91, 92, 92') für die Härter-Komponente (B, B1, B2) in Wirkverbindung bringbar sind, und wobei die Vorratsbehälter (90, 91, 92, 92') in ihren Innenräumen (90, 91a, 92a, 92'a) die Behälterinhalte beaufschlagende plattenförmige Kolben (240, 241, 242, 242') mit vermittels motorisch betreibbaren Hydraulikzylindern oder anderweitig ausgebildeten Antriebsvorrichtungen oder durch Handbetätigung in Behälterlängsrichtung bewegbaren Kolbenstangen (243, 244, 245, 245') aufweisen, vermittels der die Inhalte der Vorratsbehälter (90, 91, 92, 92') für die Binder-Komponente (A) und für die Härter-Komponenten (B, B1, B2) in die Mischvorrichtung (1) oder um Teilinhalte der Vorratsbehälter (91, 92, 92') für die Härter-Komponenten (B, B1, B2) in den Auffangbehälter (230) pressbar sind.

3. Gerät nach Anspruch 1 oder 2,
**dadurch gekennzeichnet,**
**dass** der Auffangbehälter (230) aus einem becherartigen zylindrischen oder eine andere geometrische Querschnittsform aufweisenden und bevorzugterweise einseitig geschlossenen Formkörper (235) besteht, dessen Wand (235c) zwei nebeneinander liegend angeordnete, mit dem Innenraum (235b) des Formkörpers (235) in Verbindung stehenden Rohrstutzen (231, 232) aufweist, die so angeordnet und ausgebildet sind, dass der Auffangbehälter (230) vermittels der in die Austrittsöffnungen (202, 203) des Abfüllkopfes (104) für die Härter-Komponenten (B, B1) einführbaren Rohrstutzen (231, 232) auf den Abfüllkopf (104) aufsteckbar sind.

4. Gerät nach einem der vorhergehenden Ansprüche 1 bis 3,
**dadurch gekennzeichnet,**
**dass** der Formkörper (235) des Auffangbehälters (230) auf seiner den Rohrstutzen (231, 232, 232') gegenüberliegenden Wandfläche (235c) einen Rohrstutzen (234) aufweist, in den zur Halterung und Zentrierung des Auffangbehälters (230) die Handhabe bzw. Klemmeinrichtung (103) des Gerätes (100) die Antriebswelle des Antriebes für die Mischvorrichtung (1) eingreifend ist.

5. Gerät nach einem der vorhergehenden Ansprüche 1 bis 4,
**dadurch gekennzeichnet,**
**dass** die Kolbenstangen (110, 111, 112) mit ihren plattenförmigen Kolben (240, 241, 242) zur Handbetätigung über einen Handgriff (260) verbunden sind.

6. Gerät nach einem der vorhergehenden Ansprüche 1 bis 5,
**dadurch gekennzeichnet,**
**dass** die Mischvorrichtung (1) einen hohlzylinderartigen Statorteil (16) und einen in diesem konzentrisch um eine Längsachse (20) drehbar aufgenommenen Rotorteil (19) aufweist und die Mischkammer (14) zwischen dem Statorteil (16) und dem Rotorteil (19) ringspaltartig ausgebildet ist, wobei sich mehrere am Statorteil (16) angeformte erste Mischzähne (23) radial nach innen und mehrere am Rotorteil (19) angeformte zweite Mischzähne (24) radial nach außen in die Mischkammer (14) hinein erstrecken, um vermittels einer Rotationsbewegung des Rotorteils (19) im Statorteil (16) die Mischzähne (23, 24) gegeneinander zu bewegen und eine Vermischung der Komponenten (A, B) zu schaffen, wobei der Statorteil (16) drei mit der Mischkammer (14) verbundene Eintrittsöffnungen (17b, 17'b, 17"b) für die Härter-Komponenten (B, B1, B2) aufweist.

7. Gerät nach einem der vorhergehenden Ansprüche 1 bis 6,
**dadurch gekennzeichnet,**
**dass** der Statorteil (16) an seinem den Eintrittsöffnungen (17a, 17b, 17'b, 17"b) abgekehrten Ende (16a) eine ringförmige Halterung (120) trägt, die Befestigungsdurchbrechungen (121) aufweist und die bajonettverschlussartig lösbar und drehbar mit dem Statorteil (16) verbunden ist, wobei die Drehbarkeit vermittels Anschlägen (122, 123; 122a, 123a) derart begrenzt ist, dass eine Passung der Eintrittsöffnung (17a) für die Binder-Komponente (A) mit der Zuführung für die Binder-Komponente (A) und gleichzeitig eine Passung der Eintrittsöffnungen (17b, 17'b, 17"b) für die Härter-Komponenten (B, B1, B2) mit den Zuführungen für die der Härter-Komponenten erreicht wird.

8. Gerät nach Anspruch 7,
**dadurch gekennzeichnet,**
**dass** die ringförmige Halterung (120) zwei sich gegenüberliegende parallel zum umlaufenden Rand der Halterung (120) bogenförmig verlaufende, schlitzförmige Durchbrechungen (125; 135) aufweist, von denen jede schlitzförmige Durchbrechung (125; 135) zwei Führungsabschnitte (125a, 125b; 135a, 135b) mit unterschiedlichen Breiten aufweist, von denen der jeweils breitere Führungsabschnitte (125a; 135a) zum Einführen eines am unteren umlaufenden Rand (16a) des Statorteils (16) angeformten L-förmigen Führungsnockens (140; 140') ausgebildet ist, wobei die Breite des breiteren Führungsabschnittes (125a, 135a) der Länge des freien abgewinkelten Schenkels (140a; 140'a) des Führungsnockens (140; 140') entspricht, und von denen der jeweils schmälere Führungsabschnitt (125b; 135b) eine Breite aufweist, die der Stärke des an dem unteren umlaufenden Rand (16a) des Statorteils (16) angeformten und parallel zur Längsrichtung der Mischvorrichtung (1) verlaufenden Schenkels (140b; 140'b) des L-förmigen Führungsnockens (140; 140') entspricht.

9. Gerät nach einem der vorhergehenden Ansprüche 1 bis 8,
**dadurch gekennzeichnet,**
**dass** der jeweils außenliegende Wandbereich (125c; 135c) des schmäleren Führungsabschnittes (125b; 135b) unter Ausbildung zungenartiger Randbereiche (127, 137) stegartige Wandabschnitte (125d; 135d) mit nutenartigen Ausnehmungen aufweist, deren Tiefe in etwa der Stärke des abgewinkelten Schenkels (140a; 140'a) des L-förmigen Führungsnockens (140, 140') entspricht, wobei die Anzahl der L-förmigen Führungsnocken größer als zwei L-förmige Führungsnocken sein kann.

10. Gerät nach einem der vorhergehenden Ansprüche 1 bis 9,
**dadurch gekennzeichnet,**
**dass** die ringförmige Halterung (120) aus einem Kunststoff oder Metall besteht.

11. Gerät nach einem der vorhergehenden Ansprüche 1 bis 10,
**dadurch gekennzeichnet,**
**dass** die ersten Mischzähne (23) auf zumindest einer ersten Mischzahnebene (10) und die zweiten Mischzähne (24) auf zumindest einer zweiten Mischzahnebene (11) angeordnet sind, und die Mischzahnebenen (10, 11) axial in Richtung der Längsachse (20) etagenartig zueinander versetzt sind, sodass die zweiten Mischzähne (24) des Rotorteils (19) in den jeweiligen Zwischenräumen der ersten Mischzähne (23) des Statorteils (16) radial umlaufen.

12. Gerät nach einem der vorhergehenden Ansprüche 1 bis 11,
**dadurch gekennzeichnet,**
**dass** die Mischzähne (23, 24) jeweils Stirnseitenflächen (30, 31) aufweisen, welche jeweils in Axialrichtung einander zugewandt sind, um diese bei einer axial wirkenden Kraft zwischen dem Statorteil (16) und dem Rotorteil (19) gegeneinander zu positionieren.

13. Gerät nach Anspruch 12,
**dadurch gekennzeichnet,**
**dass** die Stirnseitenflächen (30, 31) in Bezug zu einer normal zur Rotationsachse angeordneten Ebene unter einem Winkel (α) geneigt sind, sodass die Stirnseitenflächen (30, 31) während des Mischvorgangs aufeinander abgleiten, ohne dass von den Mischzähnen (23, 24) Material abträgt und in das Mischgut gelangt.

14. Gerät nach einem der vorhergehenden Ansprüche 1 bis 13,
**dadurch gekennzeichnet,**
**dass** der Rotorteil (19) endseitig Vorsprünge (22) aufweist, welche in die Eintrittsöffnung (17a) zur Zufuhr der Binder-Komponente (A) hineinragen und mit der Rotation des Rotorteils (19) mitrotieren, um die Thixotropie der Binder-Komponente (A) bereits im Zuführkanal der Eintrittsöffnung (17a) zu reduzieren.

15. Gerät nach einem der vorhergehenden Ansprüche 1 bis 14,
**dadurch gekennzeichnet,**
**dass** der Rotorteil (19) eine endseitig offene, hohlzylinderartige Ausnehmung (29) aufweist, in welche ein Kern geometrieangepasst einsetzbar ist, vermittels dessen der Rotorteil (19) antreibbar ist.

16. Gerät nach Anspruch 15,
**dadurch gekennzeichnet,**
**dass** die Ausnehmung (29) vom Körper des Rotorteils (19) radial nach innen verlaufende Rastrippen (25) aufweist, welche in entsprechende Aussparungen im Kern einrasten, um das Antriebsdrehmoment zum Betrieb der Mischvorrichtung (1) vom rotatorisch angetriebenen Kern auf das Rotorteil (19) zu übertragen.

17. Gerät nach einem der vorhergehenden Ansprüche 1 bis 16,
**dadurch gekennzeichnet,**
**dass** der Rotorteil (19) Dichtlippen (26) aufweist, um die Mischkammer (14) zwischen dem Rotorteil (19) und dem Statorteil (16) abzudichten und ein Austreten von Mischgut zu verhindern.

18. Gerät nach einem der vorhergehenden Ansprüche 1 bis 17,
**dadurch gekennzeichnet,**
**dass** der Statorteil (16) zumindest eine tellerförmige Anformung (18) am Außenumfang aufweist, wobei zumindest eine teilertörmige Anformung (18) eine halbmondförmige Rastkontur (15) umfasst, in die beim Einsetzen der Mischvorrichtung (1) ein Stiftelement eingreift, um die radiale Position der Abgabeöffnung (21) im Statorteil (16) zu sichern.

19. Gerät nach einem der vorhergehenden Ansprüche 1 bis 18,
**dadurch gekennzeichnet,**
**dass** der Rotorteil (19) einen zylinderförmigen Lagerabschnitt (27) aufweist, um im Statorteil (16) zur radialen Lagerung eine Gleitlageranordnung zu schaffen.

20. Gerät nach einem der vorhergehenden Ansprüche 1 bis 19,
**dadurch gekennzeichnet,**
**dass** der Statorteil (16) eine Stützlagerfläche (12) umfasst, an welcher der Rotorteil (19) mit den an diesem angeformten Mischzähnen (24) stirnseitig anliegt und abgleitet, um eine axiale Gleitlageranordnung zu schaffen.

21. Gerät nach einem der Ansprüche 17 bis 20,
**dadurch gekennzeichnet,**
**dass** zwischen den Dichtlippen (26) ein Hohlraum (28) ausgebildet ist, um ein Auffangen von durch die Dichtlippen (26) hindurchtretendem Mischgut zu ermöglichen.

22. Gerät nach Anspruch 21,
**dadurch gekennzeichnet,**
**dass** der Statorteil (16) im zylindrischen Abschnitt des Hohlraumes (28) umfangsseitig zumindest eine Austrittsöffnung (13) aufweist, um ein Austreten von Mischgut seitens des zylinderförmigen Lagerabschnittes (27) zu verhindern.

23. Gerät nach einem der vorhergehenden Ansprüche 1 bis 22,
**dadurch gekennzeichnet,**
**dass** zumindest der Statorteil (16) aus einem transparenten Material gebildet ist, wobei das transparente Material aus der Gruppe der Kunststoffe, umfassend ein Polycarbonat (PC), ein Polymethylmetacrylat (PMMA) und /oder ein Styrol/Acrylnitril (SAN), ausgebildet ist.

24. Gerät nach einem der Ansprüche 1 bis 23,
**dadurch gekennzeichnet,**
**dass** der Formkörper (235) des Auffangbehälters (230) aus einem Kunststoff oder einem anderen geeignetem Material besteht.

25. Gerät nach einem der vorhergehenden Ansprüche 1 bis 24,
**dadurch gekennzeichnet,**
**dass** das Traggestell eine zu öffnende, transparente Schutzabdeckung (200) zur Abdeckung der Vorratsbehälter (90, 91, 92, 92') aufweist, wobei ein Schutzschalter in Wirkverbindung mit der Schutzabdeckung (200) und dem Gerät (100) vorgesehen ist, der das Gerät (100) abschaltet, wenn die Schutzabdeckung geöffnet ist, die aus einem glasklaren Kunststoff oder einem anderen geeigneten Material besteht und türartig ausgebildet ist.

26. Gerät nach einem der vorhergehenden Ansprüche 1 bis 25,
**dadurch gekennzeichnet,**
**dass** das Traggestell des Gerätes (100) vorderseitig und/oder rückseitig Aufnahmebehälter (300, 301) zur Aufnahme von verbrauchten und neuen Mischvorrichtungen (1) aufweist.

27. Gerät nach einem der vorhergehenden Ansprüche 1 bis 26,
**dadurch gekennzeichnet,**
**dass** an dem Traggestell des Gerätes (100) sichtbar eine mit einer Stromquelle verbundene optische Signaleinrichtung (350), wie eine ein weißes Licht oder farbiges Licht aussendende Signallampe (351) und/oder eine akustische Signaleinrichtung (360), wie Signalhorn oder Sirene (361) angeordnet sind, wobei beide Signaleinrichtungen (350, 360) bei einer Inbetriebnahme des Gerätes (100) für einen vorgegebenen Zeitraum, bevorzugterweise für einen Zeitraum von zwei oder drei Minuten, durch Aufleuchten und/oder Signalabgabe aktiviert werden.

28. Gerät nach Anspruch 27,
**dadurch gekennzeichnet,**
**dass** bei Leeranzeige für den Vorratsbehälter (92') für die Härter-Komponente (B2) die Signaleinrichtung (360) aktiviert wird.
